# EUROPEAN PATENT APPLICATION

(11) **EP 4 797 797 A1**
(43) Date of publication of application: **26.08.2026**
(21) Application number: 24890330.4
(22) Date of filing: 20.09.2024
(51) Int. Cl.: H04W 36/08

(54) **DATA TRANSMISSION METHOD AND APPARATUS**

(30) Priority: 17.11.2023 CN 202311545456
(71) Applicant: HUAWEI TECHNOLOGIES CO., LTD., Shenzhen 518129 (CN)
(72) Inventor: LIU, Nannan, Shenzhen, Guangdong 518129 (CN); LI, Bingzhao, Shenzhen, Guangdong 518129 (CN); CHANG, Junren, Shenzhen, Guangdong 518129 (CN); QIANG, Li, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2024/120066
(87) International publication number: WO 2025/102972

(57) **Abstract**

Embodiments of this application provide a data transmission method and an apparatus. The method includes: A first access network device sends first progress information of first service data of a terminal device to a second access network device, where the first progress information includes information about a data amount of the first service data and/or information about time of the first service data; the first access network device receives acknowledgment information of the first service data from the second access network device, where the acknowledgment information indicates whether the second access network device is capable of completing transmission of the first service data; and the first access network device sends first acknowledgment information of the first service data to the terminal device, to indicate whether an access network device is capable of completing transmission of the first service data. In a handover scenario, according to the method, the terminal device can learn in time whether the access network device is capable of completing transmission of the service data, so that the terminal device can perform a next decision in time.

## Description

### CROSS-REFERENCE TO RELATED APPLICATIONS

This application claims priority to Chinese Patent Application No. 202311545456.1, filed with the China National Intellectual Property Administration on November 17, 2023 and entitled "DATA TRANSMISSION METHOD AND APPARATUS", which is incorporated herein by reference in its entirety.

### TECHNICAL FIELD

This application relates to the field of wireless communication technologies, and in particular, to a data transmission method and an apparatus.

### BACKGROUND

Generally, to enhance image quality, a mobile phone of a user needs to locally process an image obtained through photographing. However, with the increasing requirements for quality of a processed image, local image processing on the mobile phone can hardly meet such requirements. In view of this, a manner of processing an image on the mobile phone with assistance of a cloud is proposed. To be specific, the mobile phone may upload the image to the cloud through a base station, and the cloud processes the image, and then returns a processed image to the mobile phone through the base station. For this image processing manner, before generating image data locally, the mobile phone needs to obtain a maximum data amount and a delay that can be ensured by the base station for completing transmission. Then, the mobile phone may locally generate and/or transmit data of a corresponding size based on the information about the base station, to ensure that the entire image data of the mobile phone can be effectively uploaded to the cloud within specified time through the base station. However, it cannot be ensured that the entire image data of the mobile phone of the user can be transmitted within the specified time through the accessed base station, and the user cannot learn of the situation in time. Consequently, image data processing efficiency of the user is low, and user experience is poor.

Therefore, how to ensure that a terminal device learns in time whether service data can be transmitted through an access network device is one of problems to be resolved currently.

### SUMMARY

This application provides a data transmission method and an apparatus, to ensure that a terminal device can learn in time whether service data can be transmitted through an access network device.

According to a first aspect, an embodiment of this application provides a data transmission method. The method may be performed by a first access network device, or may be performed by a chip or a chip system corresponding to the first access network device. This is not limited. The first access network device is used as an example. The method may include: The first access network device sends first progress information of first service data of a terminal device to a second access network device, where the first progress information includes information about a data amount of the first service data and/or information about time of the first service data; the first access network device receives acknowledgment information of the first service data from the second access network device, where the acknowledgment information indicates whether the second access network device is capable of completing transmission of the first service data; and the first access network device sends first acknowledgment information of the first service data to the terminal device, where the first acknowledgment information indicates whether an access network device is capable of completing transmission of the first service data.

In this embodiment of this application, the first service data is determined or generated by the terminal device based on information about a first data amount and/or information about first time that are/is from the first access network device. The first data amount may be a data amount for which transmission can be completed by the first access network device within the first time. In this application, the first data amount may also be understood as a data amount threshold for data that can be transmitted by the first access network device, and the first time may be understood as a delay threshold for the data that can be transmitted by the first access network device. The first service data may be associated with one or more of a first quality of service flow QoS flow, a first data radio bearer DRB, a first packet data convergence protocol PDCP entity, a first radio link control RLC entity, a first logical channel LCH, and the like. In addition, a specific form of the first service data may be picture data, video data, text data, or a signal. This is not limited in this application.

In the foregoing, the first acknowledgment information sent by the first access network device to the terminal device may indicate whether the second access network device is capable of completing transmission of the first service data, or may indicate whether the first access network device or another access network device is capable of completing transmission of the first service data. This can be flexibly designed.

In the solution of this application, the first access network device sends the progress information of the first service data of the terminal device to the second access network device, where the first progress information includes the information about the amount of the first service data and/or the information about the time of the first service data. Further, the first access network device receives the acknowledgment information of the first service data fed back by the second access network device, where the acknowledgment information indicates whether the second access network device is capable of completing transmission of the first service data. The first access network device may send the first acknowledgment information of the first service data to the terminal device based on the acknowledgment information, to indicate whether the access network device is capable of completing transmission of the first service data, so that the terminal device can learn in time whether the service data can be transmitted through the access network device.

The method in this embodiment of this application may be applied to scenarios such as handover/reselection. For example, the first progress information of the first service data may be carried in a handover request message, the acknowledgment information of the first service data is carried in a handover request acknowledgment message, and the first acknowledgment information of the first service data is carried in an RRC reconfiguration message, a media access control control element MAC CE, downlink control information DCI, or the like. This is not limited.

In a possible implementation, the first access network device is a source access network device of the terminal device, and the second access network device is a target access network device of the terminal device. In the scenarios such as handover or reselection, the terminal device may be handed over from the first access network device to the second access network device, or handed over from a source cell of the first access network device to a target cell of the second access network device.

In this implementation, in the scenarios such as handover or reselection, the terminal device may learn in time whether the target access network device after handover is capable of completing transmission of the first service data of the terminal device.

In a possible implementation, the information about the data amount of the first service data may include information about a remaining data amount of the first service data, and the remaining data amount is obtained based on a first data amount and a second data amount. The information about the time of the first service data may include information about remaining time of the first service data, and the remaining time is obtained based on first time and second time. The first data amount may be a data amount of the first service data that the first access network device is capable of completing within the first time, and the second data amount is a data amount of the first service data that the terminal device has transmitted within the second time.

In this implementation, the second access network device can effectively determine, based on the information about the remaining data amount of the first service data and/or the remaining time of the first service data, whether the second access network device is capable of completing transmission of the remaining first service data.

In a possible implementation, the acknowledgment information of the first service data may include: information indicating that the second access network device is capable of completing transmission of the first service data based on the first progress information, or information indicating that the second access network device is incapable of completing transmission of the first service data based on the first progress information.

In a possible implementation, the first progress information may further include generation information of the first service data, where the generation information of the first service data indicates whether the terminal device has generated the first service data. In this implementation, the second access network device can be effectively notified of whether the terminal device has generated the first service data, and the second access network device may feed back, based on the information, an amount of data that can be transmitted by the second access network device and/or time in which the second access network device is capable of completing transmission.

In a possible implementation, when the acknowledgment information of the first service data indicates that the second access network device is incapable of completing transmission of the first service data, the acknowledgment information of the first service data may further include information about a third data amount and/or information about third time. The information about the third data amount may be a data amount that can be completed by the second access network device within the third time. In this implementation, the first access network device can effectively learn of the amount of data that can be transmitted by the second access network device and/or the time in which the second access network device is capable of completing transmission, to subsequently indicate the data amount and/or the time to the terminal device.

In a possible implementation, the first acknowledgment information of the first service data may include information indicating that the second access network device is capable of completing transmission of the first service data, or information indicating that the second access network device is incapable of completing transmission of the first service data. In this implementation, the terminal device can be directly notified whether the second access network device is capable of completing transmission of the first service data, so that the terminal device can determine in time whether to continue to transmit the first service data through the second access network device.

In a possible implementation, when the second access network device is incapable of completing transmission of the first service data, the first acknowledgment information further includes the information about the third data amount and/or the information about the third time. In this implementation, when the second access network device is incapable of completing transmission of the first service data, the second access network device may notify the terminal device of a data amount and/or time that can be supported by the second access network device for transmission, so that the terminal device regenerates or determines service data that can be transmitted through the second access network device.

In a possible implementation, the method further includes: The first access network device receives second progress information of the first service data from the terminal device, where the second progress information includes information about a remaining data amount of the first service data and/or information about remaining time of the first service data. In this implementation, the first access network device can effectively obtain the remaining data amount and/or the remaining time of the first service data, for subsequent notification to the second access network device.

In a possible implementation, the second progress information may further include the generation information of the first service data, and the generation information indicates whether the terminal device has generated the first service data. In this implementation, the first access network device can effectively learn whether the first service data has been generated, for subsequent notification to the second access network device.

According to a second aspect, an embodiment of this application provides a data transmission method. The method may be performed by a second access network device, or may be performed by a chip or a chip system corresponding to the second access network device. This is not limited. The second access network device is used as an example. The method may include: The second access network device receives first progress information of first service data of a terminal device from a first access network device, where the first progress information includes information about a data amount of the first service data and/or information about time of the first service data; and the second access network device sends acknowledgment information of the first service data to the first access network device, where the acknowledgment information indicates whether the second access network device is capable of completing transmission of the first service data.

In this embodiment of this application, the first service data may be determined or generated by the terminal device based on information about a first data amount and/or information about first time that are/is from the first access network device. The first data amount is a data amount for which transmission can be completed by the first access network device within the first time. In this application, the first data amount may also be understood as a data amount threshold for data that can be transmitted by the first access network device, and the first time may be understood as a delay threshold for the data that can be transmitted by the first access network device. The first service data may be associated with one or more of a first quality of service flow QoS flow, a first data radio bearer DRB, a first packet data convergence protocol PDCP entity, a first radio link control RLC entity, a first logical channel LCH, and the like. In addition, a specific form of the first service data may be picture data, video data, text data, or a signal. This is not limited in this application.

In the foregoing, the first acknowledgment information sent by the first access network device to the terminal device may indicate whether the second access network device is capable of completing transmission of the first service data, or may indicate whether the first access network device is capable of completing transmission of the first service data. This can be flexibly designed.

In the solution of this application, the second access network device receives the progress information of the first service data of the terminal device sent by the first access network device, where the first progress information includes the information about the amount of the first service data and/or the information about the time of the first service data. Further, the second access network device feeds back the acknowledgment information of the first service data to the first access network device, where the acknowledgment information indicates whether the second access network device is capable of completing transmission of the first service data. Therefore, the first access network device may indicate, to the terminal device based on the acknowledgment information, whether the access network device is capable of completing transmission of the first service data, so that the terminal device can learn in time whether the service data can be transmitted through the access network device.

When the method in this embodiment of this application is applied to a handover scenario, the first progress information of the first service data may be carried in a handover request message, and the acknowledgment information of the first service data is carried in a handover request acknowledgment message.

In a possible implementation, the information about the data amount of the first service data includes information about a remaining data amount of the first service data, and the remaining data amount is obtained based on a first data amount and a second data amount. The information about the time of the first service data includes information about remaining time of the first service data, and the remaining time is obtained based on first time and second time. The first data amount is a data amount of the first service data that the first access network device is capable of completing within the first time, and the second data amount is a data amount of the first service data that the first access network device has transmitted within the second time.

In a possible implementation, the method further includes: The second access network device determines whether the first service data can be completed based on the first progress information of the first service data.

In a possible implementation, when the second access network device is capable of completing the first service data based on the first progress information of the first service data, the acknowledgment information of the first service data includes information indicating that the second access network device is capable of transmitting the first service data based on the first progress information of the first service data.

In a possible implementation, when the second access network device is incapable of completing transmission of the first service data based on the first progress information of the first service data, the acknowledgment information of the first service data includes information indicating that the second access network device is incapable of completing transmission of the first service data based on the first progress information of the first service data.

In a possible implementation, the first progress information may further include generation information of the first service data, where the generation information indicates whether the terminal device has generated the first service data.

In a possible implementation, when the second access network device is incapable of completing transmission of the first service data, the method further includes: The second access network device determines a third data amount and/or third time, where the third data amount is a data amount that can be completed by the second access network device within the third time.

In a possible implementation, the acknowledgment information of the first service data may further include information about the third data amount and/or information about the third time.

According to a third aspect, an embodiment of this application provides a data transmission method. The method may be performed by a terminal device, or may be performed by a chip or a chip system corresponding to the terminal device. This is not limited. The terminal device is used as an example. The method may include: The terminal device sends second progress information of first service data, where the second progress information includes information about a remaining data amount of the first service data and/or information about remaining time of the first service data; the terminal device receives first acknowledgment information of the first service data from a first access network device, where the first acknowledgment information indicates whether an access network device is capable of completing transmission of the first service data; and when the first acknowledgment information indicates that the access network device is incapable of completing transmission of the first service data, the first acknowledgment information includes information about a third data amount and/or information about third time, and the third data amount is a data amount that can be completed by the second access network device within the third time.

In this embodiment of this application, the first service data is determined or generated by the terminal device based on information about a first data amount and/or information about first time that are/is from the first access network device. The first data amount may be a data amount for which transmission can be completed by the first access network device within the first time. In this application, the first data amount may also be understood as a data amount threshold for data that can be transmitted by the first access network device, and the first time may be understood as a delay threshold for the data that can be transmitted by the first access network device. The first service data may be associated with one or more of a first quality of service flow QoS flow, a first data radio bearer DRB, a first packet data convergence protocol PDCP entity, a first radio link control RLC entity, a first logical channel LCH, and the like. In addition, a specific form of the first service data may be picture data, video data, text data, or a signal. This is not limited in this application.

In the foregoing, the first acknowledgment information sent by the first access network device to the terminal device may indicate whether the second access network device is capable of completing transmission of the first service data, or may indicate whether the first access network device is capable of completing transmission of the first service data. This can be flexibly designed.

The method in this embodiment of this application may be applied to scenarios such as handover/reselection. For example, the second progress information of the first service data may be carried in a handover request message, and the first acknowledgment information of the first service data is carried in a radio resource control RRC reconfiguration message, a media access control control element MAC CE, downlink control information DCI, or the like.

In the solution of this application, the terminal device may send the second progress information of the first service data to the first access network device, where the second progress information includes the information about the remaining data amount of the first service data and/or the information about the remaining time of the first service data. Further, the terminal device receives the first acknowledgment information of the first service data from the first access network device, where the first acknowledgment information indicates whether the access network device is capable of completing transmission of the first service data. When the first acknowledgment information indicates that the access network device is incapable of completing transmission of the first service data, the first acknowledgment information includes the information about the third data amount and/or the information about the third time, and the third data amount is a data amount that can be completed by the second access network device within the third time. When the terminal device transmits the first service data, according to the method, the terminal device can learn in time whether transmission of the first service data can be completed through the second access network device. In addition, when transmission cannot be completed, service data that can be transmitted through the second access network device can be further effectively generated or determined based on an amount of data that can be transmitted by the second access network device and/or time in which the second access network device is capable of completing transmission, to ensure that the service data of the terminal device can be transmitted through the access network device.

In a possible implementation, the remaining data amount of the first service data is obtained based on a first data amount and a second data amount, and the remaining time of the first service data is obtained based on first time and second time. The first data amount may be a total data amount of the first service data that the first access network device is capable of completing within the first time, and the second data amount may be a data amount of the first service data that the first access network device has transmitted within the second time.

In a possible implementation, the second progress information further includes generation information of the first service data, and the generation information indicates whether the terminal device has generated the first service data.

In a possible implementation, the first acknowledgment information includes information indicating that the second access network device is capable of completing transmission of the first service data, or information indicating that the second access network device is incapable of completing transmission of the first service data.

In a possible implementation, the method further includes: The terminal device receives query information from the first access network device, where the query information is used to query the second progress information of the first service data.

An embodiment of this application further provides another data transmission method. For details, refer to the following fourth aspect and fifth aspect.

According to a fourth aspect, an embodiment of this application provides a data transmission method. The method may be performed by a first access network device, or may be performed by a chip or a chip system corresponding to the first access network device. This is not limited. The first access network device is used as an example. The method may include: The first access network device sends first acknowledgment information to a terminal device when a first condition is met, where the first acknowledgment information includes information indicating that the access network device is incapable of completing transmission of first service data. The first condition may include but is not limited to: The first access network device sends a handover request message; or the first access network device receives a handover request acknowledgment message.

In this embodiment of this application, the first access network device is an access network device that can currently serve the terminal device, and may also be referred to as a source access network device.

In this embodiment of this application, the first service data may be determined or generated by the terminal device based on information about a first data amount and/or information about first time that are/is from the first access network device. The first data amount is a data amount for which transmission can be completed by the first access network device within the first time. In this application, the first data amount may also be understood as a data amount threshold for data that can be transmitted by the first access network device, and the first time may be understood as a delay threshold for the data that can be transmitted by the first access network device. The first service data may be associated with one or more of a first quality of service flow QoS flow, a first data radio bearer DRB, a first packet data convergence protocol PDCP entity, a first radio link control RLC entity, a first logical channel LCH, and the like. In addition, a specific form of the first service data may be picture data, video data, text data, or a signal. This is not limited in this application.

In this solution of this application, when determining that the terminal device is handed over, the first access network device may indicate the terminal device to suspend transmission of the first service data, to effectively avoid a case in which the terminal device waits for transmission but finally fails to complete transmission of the first service data through the access network device.

In a possible implementation, the first acknowledgment information of the first service data may further indicate that an access network device is incapable of completing transmission of the first service data, or indicate the terminal device not to transfer the first service data. The access network device may be a second access network device or a target access network device of the terminal device, or may be the first access network device. This is not limited.

According to a fifth aspect, an embodiment of this application provides a data transmission method. The method may be performed by a terminal device, or may be performed by a chip or a chip system corresponding to the terminal device. This is not limited. The terminal device is used as an example. The method may include: The terminal device receives first acknowledgment information from a first access network device, where the first acknowledgment information includes information indicating that the access network device is incapable of completing transmission of first service data; and the terminal device determines, based on the first acknowledgment information, not to send the first service data.

In this embodiment of this application, the first access network device may be an access network device that currently serves the terminal device, and may also be referred to as a source access network device.

In this embodiment of this application, the first service data may be determined or generated by the terminal device based on information about a first data amount and/or information about first time that are/is from the first access network device. The first data amount is a data amount for which transmission can be completed by the first access network device within the first time. In this application, the first data amount may also be understood as a data amount threshold for data that can be transmitted by the first access network device, and the first time may be understood as a delay threshold for the data that can be transmitted by the first access network device. The first service data may be associated with one or more of a first quality of service flow QoS flow, a first data radio bearer DRB, a first packet data convergence protocol PDCP entity, a first radio link control RLC entity, a first logical channel LCH, and the like. In addition, a specific form of the first service data may be picture data, video data, text data, or a signal. This is not limited in this application.

In this solution of this application, when determining that the terminal device is handed over, the first access network device may indicate the terminal device to suspend transmission of the first service data, to effectively avoid a case in which the terminal device waits for transmission but finally fails to complete transmission of the first service data through the access network device.

In a possible implementation, the first acknowledgment information may further indicate that an access network device is incapable of completing transmission of the first service data, or indicate the terminal device not to transfer the first service data. The access network device may be a second access network device or a target access network device of the terminal device, or may be the first access network device. This is not limited.

According to a sixth aspect, an embodiment of this application further provides a communication apparatus. The apparatus may be configured to perform the method according to the first aspect or the fourth aspect. The apparatus may be a first access network device, or the apparatus may be a component (for example, a chip, a chip system, or a circuit) in the first access network device, or may be an apparatus that can be used in cooperation with the first access network device.

In a possible implementation, the apparatus may include modules or units that are in a one-to-one correspondence with the method/operations/steps/actions described in the first aspect. The modules or units may be hardware circuits or software, or may be implemented by the hardware circuits in combination with software. In a possible implementation, the apparatus may include a processing unit (which may also be referred to as a processing module) and a communication unit (which may also be referred to as a communication module). The communication unit may be configured to perform a receiving function and/or a sending function, and the processing unit may be configured to perform the method according to the first aspect or any possible implementation of the first aspect, or the processing unit may be configured to perform the method according to the fourth aspect or any possible implementation of the fourth aspect.

According to a seventh aspect, an embodiment of this application further provides a communication apparatus. The apparatus may be configured to perform the method according to the second aspect. The apparatus may be a second access network device, or may be a component (for example, a chip, a chip system, or a circuit) in the second access network device, or may be an apparatus that can be used in cooperation with the second access network device.

In a possible implementation, the apparatus may include modules or units that are in a one-to-one correspondence with the method/operations/steps/actions described in the second aspect. The modules or units may be hardware circuits or software, or may be implemented by the hardware circuits in combination with software. In a possible implementation, the apparatus may include a processing unit (which may also be referred to as a processing module) and a communication unit (which may also be referred to as a communication module). The communication unit may be configured to perform a receiving function and/or a sending function, and the processing unit may be configured to perform the method according to the second aspect or any possible implementation of the second aspect.

According to an eighth aspect, an embodiment of this application further provides a communication apparatus. The apparatus may be configured to perform the method according to the third aspect or the fifth aspect. The apparatus may be a terminal device, or the apparatus may be a component (for example, a chip, a chip system, or a circuit) in the terminal device, or may be an apparatus that can be used in cooperation with the terminal device.

In a possible implementation, the apparatus may include modules or units that are in a one-to-one correspondence with the method/operations/steps/actions described in the third aspect. The modules or units may be hardware circuits or software, or may be implemented by the hardware circuits in combination with software. In a possible implementation, the apparatus may include a processing unit (which may also be referred to as a processing module) and a communication unit (which may also be referred to as a communication module). The communication unit may be configured to perform a receiving function and/or a sending function, and the processing unit may be configured to perform the method according to the third aspect or any possible implementation of the third aspect, or the processing unit may be configured to perform the method according to the fifth aspect or any possible implementation of the fifth aspect.

According to a ninth aspect, an embodiment of this application provides an apparatus. The apparatus includes at least one processor and a communication interface. The communication interface is configured to communicate with another apparatus. The processor is configured to run a group of programs, so that the apparatus implements the method according to the first aspect or any possible implementation of the first aspect, or the apparatus implements the method according to the second aspect or any possible implementation of the second aspect, or the apparatus implements the method according to the third aspect or any possible implementation of the third aspect, or the apparatus implements the method according to the fourth aspect or any possible implementation of the fourth aspect, or the apparatus implements the method according to the fifth aspect or any possible implementation of the fifth aspect.

According to a tenth aspect, an embodiment of this application further provides a computer storage medium. The storage medium stores a software program. When being read and executed by one or more processors, the software program may implement the method according to the first aspect or any possible implementation of the first aspect, or the method according to the second aspect or any possible implementation of the second aspect, or the method according to the third aspect or any possible implementation of the third aspect, or the method according to the fourth aspect or any possible implementation of the fourth aspect, or implement the method according to the fifth aspect or any possible implementation of the fifth aspect.

According to an eleventh aspect, an embodiment of this application further provides a computer program product including instructions. When the computer program product runs on a computer, the method according to the first aspect or any possible implementation of the first aspect is performed, or the method according to the second aspect or any possible implementation of the second aspect is performed, or the method according to the third aspect or any possible implementation of the third aspect is performed, or the method according to the fourth aspect or any possible implementation of the fourth aspect is performed, or the method according to the fifth aspect or any possible implementation of the fifth aspect is performed.

According to a twelfth aspect, an embodiment of this application provides a communication system, including a first access network device that can implement the method according to the first aspect or the fourth aspect, a second access network device that can implement the method according to the second aspect, and a terminal device that can implement the method according to the third aspect or the fifth aspect.

According to a thirteenth aspect, an embodiment of this application further provides a chip system. The chip system includes a processor, configured to support a first access network device in implementing the functions in the first aspect or the fourth aspect, or configured to support a second access network device in implementing the functions in the second aspect, or configured to support a terminal device in implementing the functions in the third aspect or the fifth aspect.

In a possible design, the chip system further includes a memory. The memory is configured to store program instructions and data that are necessary for execution of a loading apparatus. The chip system may include a chip, or may include a chip and another discrete component.

It should be noted that, for technical effect that can be achieved in the sixth aspect to the thirteenth aspect or any possible implementation of the sixth aspect to the thirteenth aspect, refer to corresponding descriptions of technical effect that can be achieved in the first aspect to the fifth aspect or any possible implementation of the first aspect to the fifth aspect. Details are not described herein again.

### BRIEF DESCRIPTION OF DRAWINGS

FIG. 1 is a diagram of a communication system to which an embodiment of this application is applicable;
FIG. 2A and FIG. 2B are diagrams of structure layers for data transmission to which an embodiment of this application is applicable;
FIG. 3 is a schematic flowchart of a data transmission method according to an embodiment of this application;
FIG. 4 is a schematic flowchart of a specific implementation according to an embodiment of this application;
FIG. 5 is an example diagram of another data transmission method according to an embodiment of this application;
FIG. 6 is a diagram of a communication apparatus according to an embodiment of this application;
FIG. 7 is a diagram of another communication apparatus according to an embodiment of this application; and
FIG. 8 is an apparatus diagram of a chip according to an embodiment of this application.

### DESCRIPTION OF EMBODIMENTS

The following clearly and completely describes the technical solutions in embodiments of this application with reference to the accompanying drawings in embodiments of this application.

Terms used in the following embodiments are merely intended to describe specific embodiments, but are not intended to limit this application. As used in the specification and appended claims of this application, the terms "a", "one", "the", "the foregoing", "this", and "the one" of singular forms are intended to also include plural forms, for example, "one or more", unless otherwise clearly specified in the context. In embodiments of this application, unless otherwise specified, a number of nouns indicates "a singular noun or a plural noun", that is, "one or more". "At least one" means one or more, and "a plurality of" means two or more. "And/Or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between associated objects. For example, A/B indicates A or B. "At least one of the following items (pieces)" or a similar expression thereof means any combination of these items, including any combination of singular items (pieces) or plural items (pieces). For example, at least one item (piece) of a, b, or c indicates "a", "b", "c", "a and b", "a and c", "b and c", or "a, b, and c", where a, b, and c may be singular or plural.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", and "in some other embodiments" that appear in different parts of this specification do not necessarily refer to a same embodiment, but mean "one or more but not all embodiments", unless otherwise specially emphasized in another manner. Similarly, an "implementation" in this specification is also the same. Terms "include", "contain", "have", and their variants all mean "include but are not limited to", unless otherwise specifically emphasized in another manner. Words such as "example" or "for example" are used to represent an example, an illustration, or a description. Any embodiment or design scheme described with "example" or "for example" should not be explained as being more preferred or having more advantages than another embodiment or design scheme. Use of the words such as "example" or "for example" is intended to present a related concept in a specific manner for ease of understanding.

"A plurality of" in embodiments of this application indicates two or more. It should be noted that, in descriptions of embodiments of this application, words such as "first", "second", "1", and "2" are merely used for distinguishing and description, and shall not be understood as an indication or implication of relative importance or an indication or implication of a sequence. In addition, the term "indicating" mentioned in descriptions of embodiments of this application may include a direct indication and an indirect indication. When a piece of indication information indicates A, the indication information may directly indicate A or indirectly indicate A, but this does not mean that the indication information definitely carries A. In addition, a step corresponding to a dashed line box or a dashed line in the accompanying drawings of this specification is an optional step.

In embodiments of this application, both "when" and "if" mean that corresponding processing is performed in an objective situation, are not intended to limit time, do not require a determining action during implementation, and do not mean any other limitation.

Generally, to enhance image quality, a mobile phone of a user needs to locally process an image obtained through photographing. However, as a requirement for quality of a processed image increases, it is difficult for the mobile phone to meet the requirement by locally processing the image. In view of this, a manner of processing an image of the mobile phone with assistance of a cloud is proposed. To be specific, the mobile phone may upload the image to the cloud through a base station, and the cloud processes the image, and then returns a processed image to the mobile phone through the base station. For this image processing manner, before generating image data locally, the mobile phone needs to obtain a maximum data amount and a delay that can be ensured by the base station for completing transmission. Then, the mobile phone may locally generate and/or transmit data of a corresponding size based on the information about the base station, to ensure that the entire image data of the mobile phone can be effectively uploaded to the cloud within specified time through the base station. However, in a mobility scenario, when the mobile phone of the user is handed over from a source base station to a target base station, the target base station may not reach a maximum data amount and a delay that are ensured by the source base station for completing transmission. If the target base station is capable of completing transmission of image data of the mobile phone of the user and does not notify the user, the mobile phone of the user learns, only after the image data is transmitted to the target base station and a data amount or a delay of the image data reaches a maximum threshold, that the target base station is capable of completing the transmission. In this case, if the mobile phone locally processes the image data, a processing delay increases, resulting in poor user experience. Therefore, in a mobility scenario, how to ensure that a terminal device learns in time whether service data can be reported through a base station is one of problems that need to be resolved currently.

In view of the foregoing problem, embodiments of this application provide a data transmission method, to ensure that a terminal device can learn in time whether service data can be transmitted through an access network device.

The method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or may be applied to various future communication systems, for example, a 6th generation (6th generation, 6G) communication system. The method provided in embodiments of this application may be further applied to a narrow band-internet of things (narrow band-internet of things, NB-IoT) system. The method provided in embodiments of this application may be further applied to a satellite communication system. The satellite communication system may be integrated with the foregoing communication system.

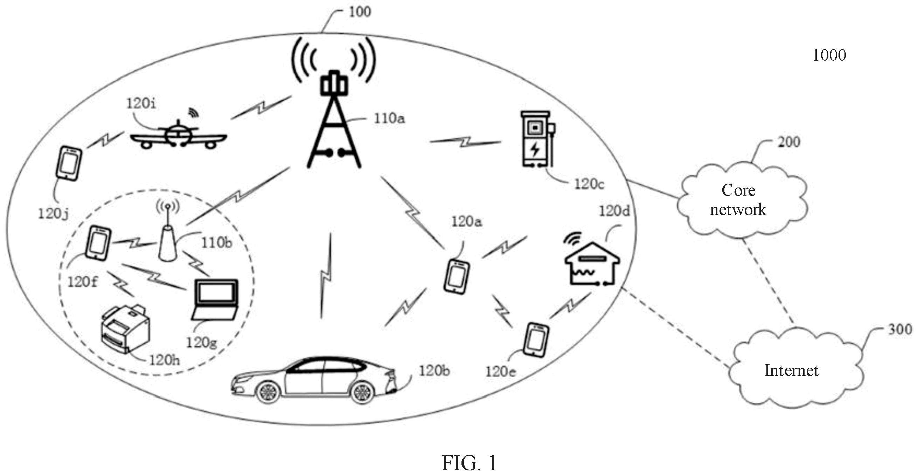

FIG. 1 shows a possible and non-limiting architecture of a communication system to which an embodiment of this application is applicable. As shown in FIG. 1, a communication system 1000 includes a radio access network (radio access network, RAN) 100, and a core network (core network, CN) 200. Optionally, the communication system 1000 may further include an internet 300. The RAN 100 includes at least one access network device (for example, 110a and 110b in FIG. 1, collectively referred to as 110) and at least one terminal device (for example, 120a to 120j in FIG. 1, collectively referred to as 120). The RAN 100 may further include another RAN node, for example, a wireless relay device and/or a wireless backhaul device (not shown in FIG. 1). The terminal device 120 is connected to the access network device in a wireless manner. The access network device is connected to the core network 200 in a wireless or wired manner. A core network device in the core network 200 and the access network device may be different physical devices, or may be a same physical device that integrates a logical function of the core network and a logical function of the radio access network.

The RAN 100 may be a 3GPP-related cellular system, for example, a 4G or 5G mobile communication system, or an evolved system after 5G (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

It may be understood that FIG. 1 shows only a possible architecture of the communication system to which embodiments of this application may be applied. In another possible scenario, the architecture of the communication system may alternatively include another device.

The access network device is a node in a radio access network (radio access network, RAN), and may also be referred to as an access network device or a RAN node (or device). The access network device is configured to help the terminal device implement wireless access. A plurality of access network devices in the communication system 1000 may be nodes of a same type or nodes of different types. In some scenarios, roles of the access network device and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The access network device and the terminal device 120 are sometimes referred to as communication apparatuses. For example, the network elements 110a and 110b in FIG. 1 may be understood as communication apparatuses having a base station function, and the network elements 120a to 120j may be understood as communication apparatuses having a terminal device function.

In a possible scenario, the access network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a sixth generation (6th generation, 6G) mobile communication system, a base station in a future mobile communication system, a satellite, an access point (access point, AP) in a Wi-Fi system, an integrated access and backhaul (integrated access and backhaul, IAB) node, or an access network device in a mobile switching center non-terrestrial network (non-terrestrial network, NTN) communication system, that is, may be deployed on a high-altitude platform or a satellite. The access network device may be a macro base station (for example, 110a in FIG. 1), a micro base station or an indoor station (for example, 110b in FIG. 1), a relay node or a donor node, or a radio controller in a CRAN scenario. The access network device may alternatively be a device having a base station function in device to device (device to device, D2D) communication, internet of vehicles communication, uncrewed aerial vehicle communication, or machine communication. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of access network devices cooperate to assist the terminal device in implementing radio access, and different access network devices each implement a part of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified as an access network device in an access network RAN, or the CU may be classified as an access network device in a core network CN. This is not limited herein.

It should be noted that, in different systems, the CU (or the CU-CP and the CU-UP) or the DU may have different names, but a person skilled in the art may understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP and the CU-UP), the DU, and the RU in this application may be implemented by using a software module, a hardware module, or a combination of the software module and the hardware module.

In embodiments of this application, a form of the access network device is not limited. An apparatus configured to implement a function of the access network device may be an access network device, or may be an apparatus that can support the access network device in implementing the function, for example, a chip system. The apparatus may be mounted in the access network device or used in cooperation with the access network device.

The terminal device 120 may also be referred to as a terminal, user equipment (user equipment, UE), a mobile station (mobile station, MS), a mobile terminal (mobile terminal, MT), or the like, or is a device that provides a user with voice or data connectivity, or may be an internet of things device. For example, the terminal device includes a hand-held device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, or a pedometer), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

The access network device and the terminal device may be at fixed locations, or may be movable. The access network device and the terminal device may be deployed on land, including indoor, outdoor, hand-held, or vehicle-mounted; may be deployed on water; or may be deployed on an airplane, a balloon, or an artificial satellite in the air. This is not limited in embodiments of this application. In addition, communication between an access network device and a terminal device, between access network devices, or between terminal devices may be performed by using a licensed spectrum, an unlicensed spectrum, or both the licensed spectrum and the unlicensed spectrum, and may be performed using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, functions of the access network device may alternatively be executed by a module (for example, a chip) in the access network device, or may alternatively be executed by a control subsystem including the functions of the access network device. The control subsystem including the functions of the access network device herein may be a control center in the foregoing application scenarios such as the smart grid, the industrial control, the smart transportation, and the smart city. Functions of the terminal device may also be performed by a module (for example, a chip or a modem) in the terminal device, or may be performed by an apparatus including the functions of the terminal device.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

In this application, names of messages in the following procedures are merely examples. With evolution of communication technologies or changes of application scenarios, names of information/messages/data in the following procedures may change. However, regardless of how the names change, as long as meanings of the information/messages/data are the same as those in this application, the information/messages/data fall within the protection scope of this application.

It should be noted that "first service data" in this application may include/be replaced with any one or more of the following: a first packet data convergence protocol PDCP, a first radio link control RLC entity, a first data radio bearer DRB, a first quality of service flow QoS flow, a first logical channel LCH, data associated with the first packet data convergence protocol PDCP, data associated with the first radio link control RLC entity, data associated with the first data radio bearer DRB, data associated with the first quality of service flow QoS flow, and data associated with the first logical channel LCH. It should be noted that the DRB in this application may include/be replaced with a bearer or a radio bearer.

This application provides a data transmission method. To better understand the solutions in embodiments of this application, the following first describes and explains names and related technical features in embodiments of this application. It should be noted that, these explanations are intended to make embodiments of this application easier to understand, but should not be construed as a limitation on the protection scope claimed in this application.

### 1. Service data

In embodiments of this application, the service data may be data related to some services or functions performed by a terminal device (in other words, the service data may be data related to a service). A specific form of the service data may include but is not limited to: photo (picture) data, video data, voice data, a text, a web page, a signal, information, and a symbol. A format of the service data is associated with a specific form of the data. For example, a format of image data includes BMF, JPG, and the like. A corresponding format of video data includes AVI, DAT, and the like. A format of text data includes word, wps, and the like. Formats of other service data are not listed one by one.

For example, in a cloud photographing scenario, a feature of photo (picture) data is bursty large data. Details may be as follows.
a. A data amount of each photo is large. For example, it takes specific time to deliver data of one photo from an APP layer of the terminal device to an AS layer of the terminal device.
b. A photographing action is not periodic but sporadic.

For example, in the cloud photographing scenario, after a user presses a photographing button, and before to-be-transmitted data is actually generated/determined, the terminal device further needs to interact with a base station, so that the terminal device obtains a maximum data amount and a delay that can be ensured by the base station. Then, the terminal device may generate/determine the to-be-transmitted data based on the maximum data amount and the delay.

For example, for picture data processing, a plurality of time-based (for example, a time interval may be 30 ms or 33.34 ms) pictures may be processed to obtain one photo. In this way, a time-based gain may be obtained. However, one photo is obtained after image processing. Therefore, data of the plurality of time-based photos may be generated together, or data of the plurality of time-based photos may be generated in different phases. Therefore, one photo (picture) in this embodiment of this application may be a photo obtained through one time of photographing, or may be a plurality of time-based photos (pictures).

In a communication service, the service data in embodiments of this application may be associated with one or more of a corresponding quality of service flow (quality of service flow, QoS flow), data radio bearer (data radio bearer, DRB), packet data convergence protocol (packet data convergence protocol, PDCP) entity, radio link control (radio link control, RLC), and logical channel (logical channel, LCH).

For example, the service data may also be referred to as data, a data set, target data, or another name. This is not limited.

### 2. Structure layer for communication between a terminal device and a network device

Communication between a base station and the terminal device complies with a specific protocol layer structure.

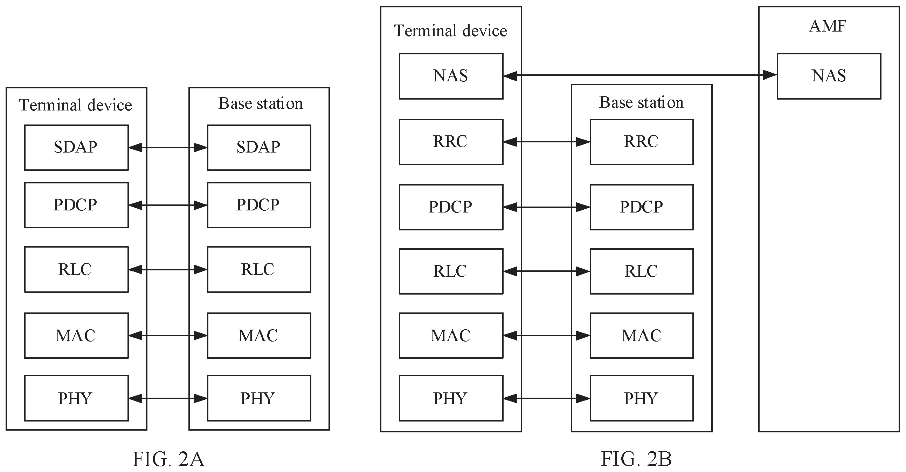

As shown in FIG. 2A, for an access stratum AS, a user plane protocol stack may include a service data adaptation protocol (service data adaptation protocol, SDAP) layer, a packet data convergence protocol PDCP layer, a radio link control RLC layer, a medium access control (medium access control, MAC) layer, and a physical (physical, PHY) layer. FIG. 2A is a diagram of interaction between layers of the terminal device and the base station based on the user plane protocol stack.

As shown in FIG. 2B, for the access stratum AS, a control plane protocol stack may include a radio resource control (radio resource control, RRC) layer, a packet data convergence protocol PDCP layer, a radio link control RLC layer, a medium access control MAC layer, and a physical PHY layer. In addition, the control plane protocol stack may further include a non-access stratum (non-access stratum, NAS). FIG. 2B is a diagram of interaction between layers of the terminal device and the base station based on the control plane protocol stack, and a diagram of interaction between NAS layers of the terminal device and a core network element (for example, an access and mobility management function (access and mobility management function, AMF)).

There may further be an APP layer above the AS layer. There may further be another layer between the AS layer and the APP layer. This is not limited. For cloud photographing, data may be generated at the APP layer, and then the APP layer delivers the data to the AS layer.

The following describes the technical solutions of this application with reference to specific embodiments.

It should be noted that in this application, "of first service data" may include/be replaced with "corresponding to first service data" or "associated with first service data". In addition, in this application, "within time" may include/be replaced with "before time."

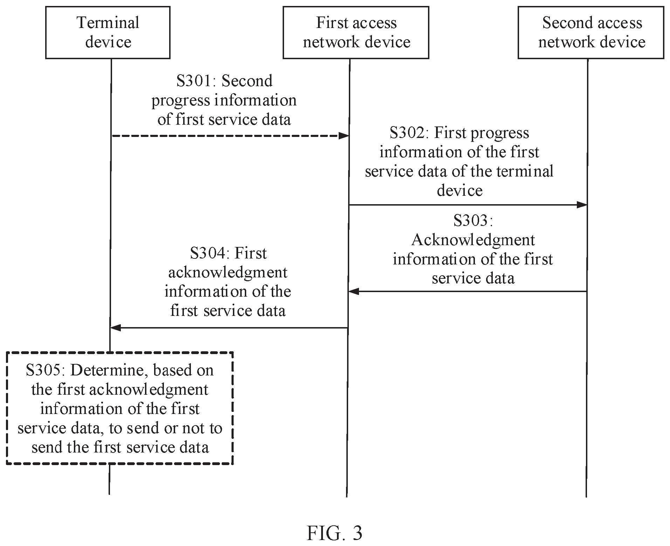

An embodiment of this application provides a data transmission method. The method is applicable to but not limited to the communication system shown in FIG. 1. The solution is described by using an example in which the method is performed by a first access network device, a second access network device, and a terminal device. The method may be performed by the first access network device, the second access network device, and the terminal device, or may be performed by components (modules, chips, and the like) corresponding to the first access network device, the second access network device, and the terminal device, or may be performed by apparatuses that are correspondingly used in cooperation with the first access network device, the second access network device, and the terminal device. Specific forms and quantities corresponding to the first access network device, the second access network device, and the terminal device are not limited in embodiments of this application. In addition, during actual application, the first access network device, the second access network device, and the terminal device may be correspondingly replaced with other devices. This is not limited in this application. As shown in FIG. 3, a specific procedure of the method is as follows.

S301: The terminal device sends second progress information of first service data to the first access network device. Correspondingly, the first access network device receives the second progress information of the first service data. S301 is an optional step.

For example, the first access network device is a source access network device (for example, a source base station) of the terminal device. The second access network device is a target access network device (for example, a target base station) of the terminal device. For example, in a mobile handover scenario, the terminal device may be handed over from the first access network device to the second access network device, or handed over from a source cell served by the first access network device to a target cell served by the second access network device.

Optionally, in a CU-DU split architecture, the first access network device in S301 may be/include/be replaced with a DU or a first DU. For example, the terminal device sends the second progress information of the first service data to the first DU.

Optionally, in the CU-DU split architecture, this application may further include: The first DU sends the second progress information of the first service data to a first CU.

In this embodiment of this application, the second progress information may alternatively be replaced with another name, for example, second information/a second message. This is not limited. The second progress information may be separately transmitted, or may be carried in another message for transmission. This is not limited either.

In this embodiment of this application, the terminal device sends the second progress information of the first service data to the first access network device in, but not limited to, any one or more of the following several possible implementations.

Implementation 1: The second progress information may include information about a data amount of the first service data and/or information about time of the first service data.

Optionally, in Implementation 1, the second progress information may further include information indicating that the terminal device has generated the first service data.

Optionally, in Implementation 1, the second progress information may further include generation information of the first service data, and the generation information of the first service data indicates that the terminal device has generated the first service data.

Optionally, Implementation 1 may be used when the terminal device has generated the first service data.

For example, the first service data may be determined or generated by the terminal device based on information about a first data amount and/or information about first time that are/is from the first access network device. For example, the first data amount may be an amount of data that can be transmitted by the first access network device within the first time.

For example, the first service data may be associated with one or more of a first quality of service flow QoS flow, a first data radio bearer DRB, a first packet data convergence protocol PDCP entity, a first radio link control RLC entity, and a first logical channel LCH. This is not limited.

For example, as shown in FIG. 2A, each layer in the access stratum AS may carry service data. The SDAP layer (or entity) may carry the service data by using at least one QoS flow, the PDCP layer (entity) may carry the service data by using at least one DRB, and the PHY layer may carry the service data by using at least one LCH. Therefore, the first service data of the terminal device in this application may be carried in one or more of the first QoS flow, the first DRB, the first PDCP layer (or entity), the first RLC layer (or entity), and the first LCH.

In addition, a specific form of the first service data may be photo (picture) data, video data, text data, or a signal. This is not limited in this application.

Implementation 2: The second progress information may include generation information of the first service data and/or information about fifth time of the first service data. For example, the generation information of the first service data is information indicating that the terminal device has generated the first service data or information indicating that the terminal device has not generated the first service data. For example, the fifth time of the first service data is remaining duration that is used for or may be used for generating the first service data, or a time point at which the first service data is generated.

Optionally, in Implementation 2, the second progress information may further include information about a data amount of the first service data and/or information about time of the first service data.

Optionally, in Implementation 2, the second progress information may further include the generation information of the first service data, and the generation information of the first service data indicates that the terminal device has not generated the first service data.

Optionally, in Implementation 2, the second progress information may further include information about a first data amount and/or information about first time.

Optionally, Implementation 2 may be used when the terminal device has not generated the first service data.

Implementation 3: The second progress information may include information about a second data amount and/or information about second time.

For example, the second data amount may be but is not limited to a data amount of the first service data that the terminal device has transmitted, or a data amount of the first service data that the terminal device has transmitted within the second time.

Optionally, in Implementation 3, the second progress information may further include information indicating that the terminal device has generated the first service data.

Optionally, in Implementation 3, the second progress information may further include generation information of the first service data, and the generation information of the first service data indicates that the terminal device has generated the first service data.

Optionally, Implementation 3 may be used when the terminal device has generated the first service data.

Implementation 4: The second progress information may include information about a total data amount of the first service data.

For example, the total data amount of the first service data may be but is not limited to a total data amount of the first service data that has been generated by the terminal device.

Optionally, in Implementation 4, the second progress information may further include information indicating that the terminal device has generated the first service data.

Optionally, in Implementation 4, the second progress information may further include generation information of the first service data, and the generation information of the first service data indicates that the terminal device has generated the first service data.

Optionally, Implementation 4 may be used when the terminal device has generated the first service data.

Optionally, in this embodiment of this application, the terminal device may obtain the information about the data amount of the first service data in, but not limited to, any one or more of the following several manners.

Manner 1: The terminal device may determine the information about the data amount of the first service data based on data amount information known to the terminal device.

In Manner 1, the terminal device may determine the information about the data amount of the first service data based on the data amount information known to the terminal device in any one of the following manners.

a1: The terminal device determines the information about the data amount of the first service data based on the information about the total data amount of the first service data and the information about the second data amount.

For example, the data amount of the first service data is a difference between the total data amount of the first service data and the second data amount (that is, the data amount of the first service data = the total data amount of the first service data - the second data amount).

For example, the second data amount may be but is not limited to the data amount of the first service data that the terminal device has transmitted, or the data amount of the first service data that the terminal device has transmitted within the second time.

a2: The terminal device determines the information about the data amount of the first service data based on the information about the first data amount and the information about the second data amount.

For example, the data amount of the first service data is a difference between the first data amount and the second data amount (that is, the data amount of the first service data = the first data amount - the second data amount).

Manner 2: The terminal device may determine the information about the data amount of the first service data based on data amount information from the first access network device.

In Manner 2, the terminal device may determine the information about the data amount of the first service data based on the data amount information from the first access network device in any one of the following manners.

b1: The terminal device determines the information about the data amount of the first service data based on the information about the total data amount of the first service data and information about a fourth data amount that is from the first access network device.

For example, the data amount of the first service data is a difference between the total data amount of the first service data and the fourth data amount (that is, the data amount of the first service data = the total data amount of the first service data - the fourth data amount).

For example, the fourth data amount may be but is not limited to a data amount of the first service data that has been received by the first access network device, or a data amount of the first service data that has been received by the first access network device within the second time.

Optionally, the first access network device may send the information about the fourth data amount to the terminal device actively or periodically, or based on query information/request information of the terminal device, or based on an event/condition trigger. For example, the terminal device sends the request information to the first access network device, where the request information may be used to query/request/inquire the information about the fourth data amount from the first access network device. Correspondingly, the first access network device sends the information about the fourth data amount to the terminal device.

b2: The terminal device determines the information about the data amount of the first service data based on the information about the first data amount and information about a fourth data amount that is from the first access network device. For example, the data amount of the first service data is a difference between the first data amount and the fourth data amount (that is, the data amount of the first service data = the first data amount - the fourth data amount).

Optionally, in this embodiment of this application, the terminal device may obtain the information about the time of the first service data in but not limited to any one or more of the following several manners.

Manner 1: The terminal device may determine the information about the time of the first service data based on time information known to the terminal device.

In Manner 1, the terminal device may determine the information about the time of the first service data based on the time information known to the terminal device in any one of the following manners.

c1: The terminal device determines the information about the time of the first service data based on information about total time of the first service data and the information about the second time. For example, the time of the first service data is a difference between the total time of the first service data and the second time (that is, the time of the first service data = the total time of the first service data - the second time).

For example, the second time may be but is not limited to duration occupied by the terminal device to transmit the first service data, or duration occupied by the terminal device to transmit the first service data of the second data amount.

c2: The terminal device determines the information about the time of the first service data based on the information about the first time and the information about the second time. For example, the time of the first service data is a difference between the first time and the second time (that is, the time of the first service data = the first time - the second time).

Manner 2: The terminal device may determine the information about the time of the first service data based on time information from the first access network device.

In Manner 2, the terminal device may determine the information about the time of the first service data based on the time information from the first access network device in any one of the following manners.

d1: The terminal device determines the information about the time of the first service data based on information about total time of the first service data and information about fourth time that is from the first access network device.

For example, the time of the first service data is a difference between the total time of the first service data and the fourth time (that is, the time of the first service data = the total time of the first service data - the fourth time).

For example, the fourth time may be but is not limited to duration that has been occupied by the first access network device to receive the first service data, or duration that has been occupied by the first access network device to receive the first service data of the second data amount.

Optionally, the first access network device may send information about the fourth time to the terminal device actively or periodically, or based on query information/request information of the terminal device, or based on an event/condition trigger. For example, the terminal device sends the request information to the first access network device, where the request information may be used to query/request/inquire the information about the fourth time from the first access network device. Correspondingly, the first access network device sends the information about the fourth time to the terminal device.

d2: The terminal device determines the information about the time of the first service data based on the information about the first time and information about fourth time that is from the first access network device. For example, the time of the first service data is a difference between the first time and the fourth time (that is, the time of the first service data = the first time - the fourth time).

It should be noted that S301 may be used as an independent embodiment, and does not depend on another step.

S302: The first access network device sends first progress information of the first service data of the terminal device to the second access network device. Correspondingly, the second access network device receives the first progress information of the first service data.

Optionally, in the CU-DU split architecture, that the first access network device sends the first progress information of the first service data of the terminal device to the second access network device may include one or more of the following cases.

Case 1: In the CU-DU split architecture, the first access network device in S302 may be/include/be replaced with a DU or a first DU. For example, the first DU sends the first progress information of the first service data of the terminal device to the second access network device.

Case 2: In the CU-DU split architecture, the first access network device in S302 may be/include/be replaced with a CU or a first CU. For example, the first CU sends the first progress information of the first service data to the second access network device.

Case 3: In the CU-DU split architecture, the second access network device in S302 may be/include/be replaced with a DU or a second DU. For example, the first access network device sends the first progress information of the first service data to the second DU.

Case 4: In the CU-DU split architecture, the second access network device in S302 may be/include/be replaced with a CU or a second CU. For example, the first access network device sends the first progress information of the first service data to the second CU.

For example, the first DU sends the first progress information of the first service data to the second DU.

Optionally, in the CU-DU split architecture, this application may further include: The first DU sends the first progress information of the first service data to the first CU.

Optionally, in the CU-DU split architecture, this application may further include: The first CU sends the first progress information of the first service data to the first DU.

Optionally, in the CU-DU split architecture, this application may further include: The second DU sends the first progress information of the first service data to the second CU.

Optionally, in the CU-DU split architecture, this application may further include: The second CU sends the first progress information of the first service data to the second DU.

In this embodiment of this application, the first progress information may alternatively be replaced with another name, for example, first information/a first message. This is not limited. The first progress information may be separately transmitted, or may be carried in another message for transmission. This is not limited either.

For example, the first progress information of the first service data may be carried in a handover request message.

In this embodiment of this application, the first access network device sends the first progress information of the first service data of the terminal device to the second access network device in but not limited to the following several possible implementations.

Implementation 1: The first progress information may include the information about the data amount of the first service data and/or the information about the time of the first service data.

Optionally, in Implementation 1, the first progress information may further include the generation information of the first service data, and the generation information of the first service data indicates that the terminal device has generated the first service data.

Optionally, in Implementation 1, the first progress information may further include the information indicating that the terminal device has generated the first service data.

Optionally, Implementation 1 may be used when the terminal device has generated the first service data.

Implementation 2: The first progress information may include the information indicating that the terminal device has not generated the first service data, and/or the information about the fifth time of the first service data.

Optionally, in Implementation 2, the first progress information may include the generation information of the first service data, and the generation information of the first service data indicates that the terminal device has not generated the first service data.

Optionally, in Implementation 2, the first progress information may further include the information about the data amount of the first service data and/or the information about the time of the first service data.

Optionally, in Implementation 2, the first progress information may further include the information about the first data amount and/or the information about the first time.

Optionally, Implementation 2 may be used when the terminal device has not generated the first service data.

In a possible implementation, the information about the data amount of the first service data may include or be replaced with information about a remaining data amount of the first service data. In a possible implementation, the information about the time of the first service data may include or be replaced with information about remaining time of the first service data. Optionally, this implementation may be applied to a case in which the terminal device has generated the first service data.

In a possible implementation, the information about the data amount of the first service data may include or be replaced with the information about the total data amount of the first service data. Optionally, this implementation may be applied to a case in which the terminal device has generated the first service data.

In a possible implementation, the information about the time of the first service data may include or be replaced with information about a deadline of the first service data. Optionally, this implementation may be applied to a case in which the terminal device has generated the first service data.

In a possible implementation, the information about the data amount of the first service data may include or be replaced with the information about the first data amount. In a possible implementation, the information about the time of the first service data may include or be replaced with the information about the first time. Optionally, this implementation may be applied to a case in which the terminal device has not generated the first service data.

In a possible implementation, the data amount of the first service data is equal to the first data amount. In a possible implementation, the time of the first service data is equal to the first time. Optionally, this implementation may be applied to a case in which the terminal device has not generated the first service data.

Optionally, the first data amount is sent by the first access network device to the terminal device. For example, the first data amount is a data amount that the first access network device promises to complete for the terminal device.

Optionally, the first time is sent by the first access network device to the terminal device. For example, the first time is time that the first access network device promises to complete for the terminal device.

For example, the first data amount is a data amount that can be completed by the first access network device within the first time.

In a possible implementation, the first progress information may further include the information about the fifth time of the first service data. For example, the information about the fifth time indicates the remaining duration that is used for or may be used for generating the first service data, or the time point at which the first service data is generated. Optionally, this implementation may be used when the first service data has not been generated.

Optionally, in Implementation 2, the first progress information may further include the information about the fifth time of the first service data.

Optionally, in this embodiment of this application, the first access network device may obtain the information about the data amount of the first service data in but not limited to any one or more of the following manners.

Manner 1: The first access network device may determine the information about the data amount of the first service data based on information from the terminal device.

In Manner 1, the first access network device may determine the information about the data amount of the first service data based on the information from the terminal device in any one of the following manners.

A1: The first access network device receives the information about the data amount of the first service data from the terminal device.

Optionally, the terminal device may send the information about the data amount of the first service data to the first access network device actively or periodically, or based on query information of the first access network device, or based on an event/condition trigger.

For example, the first access network device may send the query information to the terminal device, where the query information may be used to query/request/inquire the information about the data amount of the first service data from the terminal device. Correspondingly, the terminal device sends the information about the data amount of the first service data to the first access network device.

For example, A1 may be implemented by using the second progress information received by the first access network device from the terminal device in S301, or may be implemented by using another procedure, or may be implemented by using an independent transmission procedure. This is not limited.

Optionally, in this embodiment of this application, the query information may alternatively be replaced with another name, for example, request information/a request message, or third information/a third message. This is not limited. The query information may be separately transmitted, or may be carried in another message for transmission. This is not limited either.

A2: The first access network device determines the information about the data amount of the first service data based on the information about the total data amount of the first service data from the terminal device and the information about the second data amount from the terminal device. For example, the data amount of the first service data is the difference between the total data amount of the first service data and the second data amount (the data amount of the first service data = the total data amount of the first service data - the second data amount).

Optionally, the terminal device may send the information about the total data amount of the first service data and/or the information about the second data amount to the first access network device actively or periodically, or based on query information of the first access network device, or based on an event/condition trigger. Correspondingly, the first access network device receives the information about the total data amount of the first service data and/or the information about the second data amount from the terminal device.

For example, the first access network device may send the query information to the terminal device, where the query information may be used to query/request/inquire the information about the total data amount of the first service data and/or the information about the second data amount from the terminal device. Correspondingly, after receiving the query information, the terminal device sends the information about the total data amount of the first service data and/or the information about the second data amount to the first access network device.

For example, the second data amount may be but is not limited to the data amount of the first service data that the terminal device has transmitted, or the data amount of the first service data that the terminal device has transmitted within the second time.

A3: The first access network device determines the information about the data amount of the first service data based on the information about the first data amount and the information about the second data amount that is from the terminal device.

For example, the data amount of the first service data is the difference between the first data amount and the second data amount (that is, the data amount of the first service data = the first data amount - the second data amount).

A4: The first access network device determines the information about the data amount of the first service data based on the information about the total data amount of the first service data and the information about the fourth data amount that are from the terminal device.

For example, the data amount of the first service data is the difference between the total data amount of the first service data and the fourth data amount (that is, the data amount of the first service data = the total data amount of the first service data - the fourth data amount).

For example, the fourth data amount may be but is not limited to the data amount of the first service data that has been received by the first access network device, or the data amount of the first service data that has been received by the first access network device within the second time.

A5: The first access network device determines the information about the data amount of the first service data based on the generation information of the first service data from the terminal device. The generation information of the first service data indicates that the terminal device has not generated the first service data.

Optionally, the terminal device may send the generation information of the first service data to the first access network device actively or periodically, or based on query information of the first access network device, or based on an event/condition trigger. Correspondingly, the first access network device receives the generation information of the first service data from the terminal device.

For example, the first access network device may send the query information to the terminal device, where the query information may be used to query/request/inquire the generation information of the first service data from the terminal device. Correspondingly, after receiving the query information, the terminal device sends the generation information of the first service data to the first access network device.

For example, the data amount of the first service data is equal to the first data amount.

Manner 2: The first access network device may determine the information about the data amount of the first service data based on data amount information known to the first access network device.

In Manner 2, the first access network device may determine the information about the data amount of the first service data based on the data amount information known to the first access network device in the following manners.

B1: The first access network device determines the information about the data amount of the first service data based on the information about the first data amount and the information about the fourth data amount. For example, the data amount of the first service data is the difference between the first data amount and the fourth data amount (that is, the data amount of the first service data = the first data amount - the fourth data amount).

Optionally, in this embodiment of this application, the first access network device may obtain the information about the time of the first service data in but not limited to any one or more of the following manners.

Manner 1: The first access network device may determine the information about the time of the first service data based on information from the terminal device.

In Manner 1, the first access network device may determine the information about the time of the first service data based on the information from the terminal device in any one of the following manners.

C1: The first access network device receives the information about the time of the first service data from the terminal device.

Optionally, the terminal device may send the information about the time of the first service data to the first access network device actively or periodically, or based on query information of the first access network device, or based on an event/condition trigger.

For example, the first access network device may send the query information to the terminal device, where the query information may be used to query/request/inquire the information about the time of the first service data from the terminal device. Correspondingly, the terminal device sends the information about the time of the first service data to the first access network device.

For example, C1 may be implemented by using the second progress information received by the first access network device from the terminal device in S301, or may be implemented by using another procedure, or may be implemented by using an independent transmission procedure. This is not limited.

C2: The first access network device determines the information about the time of the first service data based on the information about the total time of the first service data and the information about the second time that are from the terminal device.

For example, the time of the first service data is the difference between the total duration of the first service data and the second time (that is, the time of the first service data = the total time of the first service data - the second time).

Optionally, the terminal device may send the information about the total time of the first service data and the information about the second time to the first access network device actively or periodically, or based on query information of the first access network device, or based on an event/condition trigger. Correspondingly, the first access network device receives the information about the total time of the first service data and the information about the second time from the terminal device.

For example, the first access network device may send the query information to the terminal device, where the query information may be used to query/request/inquire the terminal device for the information about the total time of the first service data and the information about the second time. Correspondingly, after receiving the query information, the terminal device sends the information about the total time of the first service data and the information about the second time to the first access network device.

For example, the second time may be but is not limited to the duration in which the terminal device has transmitted the first service data, or the duration in which the terminal device has transmitted the first service data of the second data amount.

C3: The first access network device determines the information about the time of the first service data based on the information about the first time and the information about the second time that is from the terminal device.

For example, the time of the first service data is a difference between the first time and the second time (that is, the time of the first service data = the first data amount - the second data amount).

C4: The first access network device determines the information about the data amount of the first service data based on the information about the total time of the first service data and the information about the fourth time that are from the terminal device.

For example, the data amount of the first service data is the difference between the total time of the first service data and the fourth time (that is, the time of the first service data = the total time of the first service data - the fourth time).

The fourth time may be but is not limited to the duration in which the first access network device has received the first service data, or the duration that has been occupied by the first access network device to receive the first service data of the second data amount.

C5: The first access network device determines the information about the time of the first service data based on the generation information of the first service data from the terminal device. The generation information of the first service data indicates that the terminal device has not generated the first service data.

Optionally, the terminal device may send the generation information of the first service data to the first access network device actively or periodically, or based on query information of the first access network device, or based on an event/condition trigger. Correspondingly, the first access network device receives the generation information of the first service data from the terminal device.

For example, the first access network device may send the query information to the terminal device, where the query information may be used to query/request/inquire the generation information of the first service data from the terminal device. Correspondingly, after receiving the query information, the terminal device sends the generation information of the first service data to the first access network device.

For example, the time of the first service data is equal to the first time.

Manner 2: The first access network device may determine the information about the time of the first service data based on time information known to the first access network device.

In Manner 2, the first access network device may determine the information about the time of the first service data based on the time information known to the first access network device in the following manners.

D1: The first access network device determines the information about the time of the first service data based on the information about the first time and the information about the fourth time.

For example, the time of the first service data is equal to the difference between the first time and the fourth time (that is, the time of the first service data = the first time - the fourth time).

In an optional implementation, the time may include/be replaced with duration, a time period, or the like. For example, the time may be expressed by using any one or more of a quantity of hyper frames, a quantity of frames, a quantity of slots, a quantity of subframes, a quantity of symbols, and an absolute time length (for example, milliseconds). This is not limited. For example, the time of the first service data may alternatively include/be replaced with "duration of the first service data". This is not limited.

In another optional implementation, the time may include/be replaced with a time point, a moment, a deadline, or the like. For example, the time may be expressed by using any one or more of a hyper frame number (hyper frame number, HFN), a system frame number (system frame number, SFN), a slot (or a slot number), a subframe (or a subframe number), a symbol (or a symbol number), absolute time, and coordinated universal time (coordinated universal time, UTC). This is not limited. For example, the time of the first service data may alternatively include/be replaced with a time point of the first service data, a deadline of the first service data, or specified time of the first service data. This is not limited.

For example, in S301, the second progress information sent by the terminal device to the first access network device may include information about the deadline of the first service data, or the terminal device may send information about the deadline of the first service data to the first access network device. For example, the deadline of the first service data may mean that the access network device (or the second access network device) needs to complete transmission of the first service data before the deadline, or transmission of the first service data needs to be completed before the deadline. Optionally, the deadline of the first service data may be determined by the terminal device. For example, the terminal device determines the deadline of the first service data based on current time and the information about the time of the first service data (or the information about the remaining time of the first service data). In addition, the terminal device may alternatively determine the deadline of the first service data in another manner. This is not limited in this application.

For example, the first progress information sent by the first access network device to the second access network device may include the deadline of the first service data, or the first access network device may send the deadline of the first service data to the second access network device. For example, the deadline of the first service data may mean that the access network device (or the second access network device) needs to complete transmission of the first service data before the deadline, or transmission of the first service data needs to be completed before the deadline.

Optionally, the deadline of the first service data may be from the terminal device, and is determined by the terminal device based on time information known to the terminal device and/or time information provided by the first access network device. For example, the terminal device determines the deadline of the first service data based on the current time and the information about the time of the first service data (or the information about the remaining time of the first service data).

Optionally, the deadline of the first service data may be determined by the first access network device based on time information known to the first access network device and/or time information provided by the terminal device. For example, the first access network device determines the deadline of the first service data based on current time and the information about the time of the first service data (or the information about the remaining time of the first service data).

Optionally, the information about the time of the first service data (or the information about the remaining time of the first service data) may be determined by the terminal device or the first access network device.

In addition, the first access network device may alternatively determine the deadline of the first service data in another manner, or obtain the deadline of the first service data in another manner. This is not limited in this application, and examples are not enumerated one by one herein.

Optionally, in this embodiment of this application, the first access network device may obtain the information about the fifth time of the first service data in but not limited to any one or more of the following manners.

Manner 1: The first access network device may determine the information about the fifth time of the first service data based on information from the terminal device.

In Manner 1, the first access network device may determine the information about the fifth time of the first service data based on the information from the terminal device in any one of the following manners.

A1: The first access network device receives the information about the fifth time of the first service data from the terminal device.

Optionally, the terminal device may send the information about the fifth time of the first service data to the first access network device actively or periodically, or based on query information of the first access network device, or based on an event/condition trigger.

For example, the first access network device may send the query information to the terminal device, where the query information may be used to query/request/inquire the information about the fifth time of the first service data from the terminal device. Correspondingly, the terminal device sends the information about the fifth time of the first service data to the first access network device.

For example, A1 may be implemented by using the second progress information received by the first access network device from the terminal device in S301, or may be implemented by using another procedure, or may be implemented by using an independent transmission procedure. This is not limited.

Optionally, in this embodiment of this application, the query information may alternatively be replaced with another name, for example, request information/a request message, or third information/a third message. This is not limited. The query information may be separately transmitted, or may be carried in another message for transmission. This is not limited either.

Manner 2: The first access network device may determine the information about the fifth time of the first service data based on time information known to the first access network device.

In Manner 2, the first access network device may determine the information about the fifth time of the first service data based on the time information known to the first access network device in the following manners.

B1: The first access network device determines the information about the fifth time of the first service data based on information about sixth time.

For example, the fifth time of the first service data is the sixth time. The information about the sixth time indicates the remaining duration that is used for or may be used for generating the first service data, or the time point at which the first service data is generated.

For example, the information about the sixth time may be reported by the terminal device to the first access network device (or the access network device).

B2: The first access network device determines the information about the fifth time of the first service data based on information about sixth time and information about seventh time.

For example, the seventh time is time elapsed since the first access network device (or the access network device) receives the information about the sixth time.

For example, the fifth time of the first service data is a difference between the sixth time and the seventh time (that is, the fifth time of the first service data = the sixth time - the seventh time).

S303: The second access network device sends the acknowledgment information of the first service data to the first access network device. Correspondingly, the first access network device receives the acknowledgment information of the first service data.

Optionally, in the CU-DU split architecture, that the second access network device sends the acknowledgment information of the first service data to the first access network device may include one or more of the following cases.

Case 1: In the CU-DU split architecture, the first access network device in S303 may be/include/be replaced with a DU or a first DU. For example, the second access network device sends the acknowledgment information of the first service data to the first DU.

Case 2: In the CU-DU split architecture, the first access network device in S303 may be/include/be replaced with a CU or a first CU. For example, the second access network device sends the acknowledgment information of the first service data to the first CU.

Case 3: In the CU-DU split architecture, the second access network device in S302 may be/include/be replaced with a DU or a second DU. For example, the second DU sends the acknowledgment information of the first service data to the first access network device.

Case 4: In the CU-DU split architecture, the second access network device in S303 may be/include/be replaced with a CU or a second CU. For example, the second CU sends the acknowledgment information of the first service data to the first access network device.

For example, the second DU sends the acknowledgment information of the first service data to the first DU.

Optionally, in the CU-DU split architecture, this application may further include: The second DU sends the acknowledgment information of the first service data to the second CU.

Optionally, in the CU-DU split architecture, this application may further include: The second CU sends the acknowledgment information of the first service data to the second DU.

Optionally, in the CU-DU split architecture, this application may further include: The first DU sends the acknowledgment information of the first service data to the first CU.

Optionally, in the CU-DU split architecture, this application may further include: The first CU sends the acknowledgment information of the first service data to the first DU.

In this embodiment of this application, the acknowledgment information of the first service data may alternatively be replaced with another name, for example, fourth information/a fourth message. This is not limited. The acknowledgment information of the first service data may be separately transmitted, or may be carried in another message for transmission. This is not limited either.

For example, the acknowledgment information of the first service data may be carried in a handover request acknowledgment message.

In a possible implementation, before the second access network device sends the acknowledgment information of the first service data to the first access network device, the method in this embodiment of this application may further include: The second access network device determines whether the second access network device is capable of completing transmission of the first service data based on the first progress information.

Optionally, in this embodiment of this application, that the second access network device determines whether the second access network device is capable of completing transmission of the first service data based on the first progress information may include the following cases.

Corresponding to Implementation 1 in S302, that the second access network device determines whether the second access network device is capable of completing transmission of the first service data based on the first progress information may include the following several cases.

Case 1: The first progress information of the first service data received by the second access network device includes the information about the data amount of the first service data and the information about the time of the first service data. In this case, the second access network device determines, based on the information about the data amount of the first service data and the information about the time of the first service data, whether transmission of the first service data can be completed.

For example, the data amount of the first service data is the remaining data amount of the first service data, and the time of the first service data is the remaining time of the first service data. The second access network device may decide/determine whether transmission of the first service data amount of the remaining data amount that can be completed within the remaining time of the first service data. If transmission of the first service data of the remaining data amount can be completed within the remaining time of the first service data, it is determined that the second access network device is capable of completing transmission of the first service data. If transmission of the first service data of the remaining data amount cannot be completed within the remaining time of the first service data, it is determined that the second access network device is incapable of completing transmission of the first service data.

Case 2: The first progress information of the first service data received by the second access network device includes the information about the data amount of the first service data. In this case, the second access device determines, based on the information about the data amount of the first service data, whether transmission of the first service data can be completed.

For example, the data amount of the first service data is the remaining data amount of the first service data, and the second access network device may decide/determine, based on a load of the second access network device, whether transmission of the first service data of the remaining data amount can be completed within preset time. The preset time may be predefined/configured time, or time negotiated by the first access network device and the second access network device in advance. This is not limited.

Case 3: The first progress information of the first service data received by the second access network device includes the information about the time of the first service data. In this case, the second access network device determines, based on the information about the time of the first service data, whether transmission of the first service data can be completed.

For example, the time of the first service data is the remaining time of the first service data, and the second access network device may decide/determine whether transmission of a preset data amount can be completed within the remaining time of the first service data amount. The preset data amount may be a predefined/configured data amount, or a data amount negotiated by the first access network device and the second access network device in advance. This is not limited. If transmission of the preset data amount can be completed within the remaining time, it is determined that the second access network device is capable of completing transmission of the first service data. If transmission of the preset data amount cannot be completed within the remaining time, it is determined that the second access network device is incapable of completing transmission of the first service data.

Corresponding to Implementation 2 in S302, that the second access network device determines whether the second access network device is capable of completing transmission of the first service data based on the first progress information may include the following several cases.

Case 1: The first progress information of the first service data received by the second access network device includes the information indicating that the terminal device has not generated the first service data and the information about the fifth time of the first service data. In this case, the second access network device determines, based on the information indicating that the terminal device has not generated the first service data and the information about the fifth time of the first service data, whether transmission of the first service data can be completed.

For example, the second access network device determines, based on the information indicating that the terminal device has not generated the first service data, that the first service data has not been generated, and the information about the fifth time indicates the remaining duration for generating the first service data. The second access network device may determine total time based on the fifth time and preset time, where the preset time may be time in which the second access network device is capable of completing transmission of the service data of the terminal device by default. The second access network device may decide/determine whether transmission of the preset data amount can be completed within the preset time after the service data is generated.

For example, the second access network device determines that the first service data has not been generated, the information about the fifth time indicates the remaining duration for generating the first service data, and the first progress information further includes the time of the first service data. In this case, the second access network device may decide/determine whether transmission of the preset data amount can be completed within the time of the first service data after the service data is generated.

For Case 1, the second access network device may alternatively determine, in another manner, whether the second access network device is capable of completing transmission of the first service data based on the first progress information. Examples are not enumerated one by one herein.

Case 2: The first progress information of the first service data received by the second access network device includes the information indicating that the terminal device has not generated the first service data, and the second access network device determines whether the first service data can be transmitted based on the first progress information.

For example, the second access network device determines that the first service data has not been generated, and the second access network device may decide/determine, based on a current load, whether transmission of a preset data amount can be completed. The preset data amount may be a predefined/configured data amount, or a data amount negotiated by the first access network device and the second access network device in advance. This is not limited. If transmission of the preset data amount can be completed, it may be determined that the second access network device is capable of completing transmission of the first service data based on the first progress information. If transmission of the preset data amount cannot be completed, it may be determined that the second access network device is incapable of completing transmission of the first service data based on the first progress information.

Optionally, the first progress information further includes the first data amount and the first time. In this case, the second access network device decides/determines whether transmission of the first data amount can be completed within the first time. If transmission of the first data amount can be completed within the first time, it is determined that the second access network device is capable of completing transmission of the first service data. If transmission of the first data amount cannot be completed within the first time, it is determined that the second access network device is incapable of completing transmission of the first service data.

For Case 2, the second access network device may alternatively determine, in another manner, whether the second access network device is capable of completing transmission of the first service data based on the first progress information. Examples are not enumerated one by one herein.

Case 3: The first progress information of the first service data received by the second access network device includes the information about the fifth time of the first service data. In this case, the second access network device may determine, based on the information about the fifth time, whether transmission of the first service data can be completed.

For example, the information about the fifth time indicates the remaining duration for generating the first service data, and the second access network device may decide/determine whether transmission of the preset data amount can be completed within the preset time after the service data is generated.

For example, the information about the fifth time indicates the remaining duration for generating the first service data, the first progress information further includes the first time of the first access network device, and the second access network device may decide/determine whether transmission of the preset data amount can be completed within the first time after the service data is generated.

For Case 3, the second access network device may alternatively determine, in another manner, whether the second access network device is capable of completing transmission of the first service data based on the first progress information. Examples are not enumerated one by one herein.

In this embodiment of this application, when the first progress information includes other information, the second access network device may determine, with reference to the foregoing manner, whether the second access network device is capable of completing transmission of the first service data. Details are not described herein again.

In a possible implementation, based on any one of the foregoing several cases, when the second access network device is incapable of completing transmission of the first service data, the method in this embodiment of this application may further include: The second access network device determines a third data amount and/or third time.

In this embodiment of this application, the acknowledgment information of the first service data sent by the second access network device to the first access network device may include but is not limited to the following several possible implementations.

Implementation a: The acknowledgment information of the first service data may include information indicating that the second access network device is capable of completing transmission of the first service data, or information indicating that the second access network device is incapable of completing transmission of the first service data.

Optionally, that the second access network device is capable of completing transmission of the first service data may include or be replaced with any one or more of the following: The second access network device is capable of completing transmission of the first service data based on the first progress information of the first service data, and does not discard (or the terminal device does not discard) the first service data, or does not release (or the terminal device does not release) one or more of a first quality of service flow QoS flow, a first data radio bearer DRB, a first packet data convergence protocol PDCP entity, a first radio link control RLC entity, a first logical channel LCH, and the like that correspond to the first service data.

Optionally, that the second access network device is incapable of completing transmission of the first service data may include or be replaced with any one or more of the following: The second access network device is incapable of completing transmission of the first service data based on the first progress information of the first service data, and discards (or the terminal device discards) the first service data, or releases (or the terminal device releases) one or more of the first quality of service flow QoS flow, the first data radio bearer DRB, the first packet data convergence protocol PDCP entity, the first radio link control RLC entity, the first logical channel LCH, and the like that correspond to the first service data.

Optionally, the acknowledgment information of the first service data may further indicate whether the second access network device is capable of completing transmission of the first service data.

Optionally, whether the second access network device is capable of completing transmission of the first service data may include or be replaced with any one or more of the following: whether the second access network device is capable of completing transmission of the first service data based on the first progress information of the first service data, whether to discard (or whether the terminal device discards) the first service data, or whether to release (or whether the terminal device releases) one or more of the first quality of service flow QoS flow, the first data radio bearer DRB, the first packet data convergence protocol PDCP entity, the first radio link control RLC entity, the first logical channel LCH, and the like that correspond to the first service data.

Optionally, when the second access network device is incapable of completing transmission of the first service data, the acknowledgment information of the first service data may include the information indicating that the second access network device is incapable of completing transmission of the first service data.

Optionally, when the second access network device is capable of completing transmission of the first service data, the acknowledgment information of the first service data may include the information indicating that the second access network device is capable of completing transmission of the first service data.

Optionally, when the second access network device is incapable of completing transmission of the first service data based on the first progress information of the first service data, the acknowledgment information of the first service data may further include information about the third data amount and/or information about the third time. Alternatively, the acknowledgment information of the first service data may further include information about a data amount that can be completed by the second access network device (for example, information about the third data amount), information about time that can be completed by the second access network device (for example, information about the third time), or information indicating that the second access network device is capable of completing the third data amount within the third time. For example, the third data amount may be a data amount that can be completed by the second access network device within the third time.

For example, the information about the data amount that can be completed by the second access network device may include/be replaced with: information about a data amount of first target data that can be transmitted by the second access network device, and information about a data amount of the first target data that can be transmitted by the second access network device within the time of the first service data. For example, the information about the time that can be completed by the second access network device may include/be replaced with information about time required by the second access network device to complete transmission of the first target data, or information about time required by the second access network device to complete transmission of data corresponding to the data amount of the first target data.

Optionally, Implementation a may be used when the terminal device has generated the first service data.

Implementation b: The acknowledgment information of the first service data may include information about a third data amount and/or information about third time.

Optionally, the acknowledgment information of the first service data may include information about a data amount that can be completed by the second access network device (for example, information about the third data amount), information about time that can be completed by the second access network device (for example, information about the third time), or information indicating that the second access network device is capable of completing the third data amount within the third time.

Optionally, Implementation b may be used when the terminal device has not generated the first service data.

S304: The first access network device sends first acknowledgment information of the first service data to the terminal device. Correspondingly, the terminal device receives the first acknowledgment information of the first service data. S304 is an optional step.

Optionally, in the CU-DU split architecture, the first access network device in S304 may be/include/be replaced with a DU or a first DU. For example, the first DU sends the first acknowledgment information of the first service data to the terminal device.

Optionally, in the CU-DU split architecture, this application may further include: The first CU sends the first acknowledgment information of the first service data to the first DU.

For example, the first acknowledgment information indicates whether the access network device (or the second access network device) is capable of completing transmission of the first service data.

In this embodiment of this application, the first acknowledgment information of the first service data may alternatively be replaced with another name, for example, fifth information/a fifth message. This is not limited. The first acknowledgment information of the first service data may be separately transmitted, or may be carried in another message for transmission. This is not limited either.

For example, the first acknowledgment information of the first service data may be carried in an RRC reconfiguration message (for example, a synchronization reconfiguration message), a media access control control element MAC CE, downlink control information (downlink control information, DCI), or the like. This is not limited.

In this embodiment of this application, the first access network device may send the first acknowledgment information of the first service data to the terminal device in the following implementations.

Implementation A: The acknowledgment information of the first service data may include information indicating that the access network device (or the second access network device) is capable of completing transmission of the first service data, or information indicating that the access network device (or the second access network device) is incapable of completing transmission of the first service data.

Optionally, that the access network device (or the second access network device) is capable of completing transmission of the first service data may include or be replaced with any one or more of the following: The access network device (or the second access network device) is capable of completing transmission of the first service data based on the first progress information (or the information about the first data amount and/or the information about the first time) of the first service data, whether to discard (or whether the terminal device discards) the first service data, or whether to release (or whether the terminal device releases) one or more of the first quality of service flow QoS flow, the first data radio bearer DRB, the first packet data convergence protocol PDCP entity, the first radio link control RLC entity, and the first logical channel LCH that correspond to the first service data.

For example, the information about the first data amount and/or the information about the first time may include/be understood as information about a data amount (for example, the information about the first data amount) that is promised by the access network device (or the first access network device) and/or information about time (for example, the information about the first time) that is promised by the access network device (or the first access network device). For example, "promised" may include/be replaced with "previously promised."

Optionally, that the access network device (or the second access network device) is incapable of completing transmission of the first service data may include or be replaced with any one or more of the following: The access network device (or the second access network device) is incapable of completing transmission of the first service data based on the first progress information (or the information about the first data amount and/or the information about the first time) of the first service data, and discards (or the terminal device discards) the first service data, or releases (or the terminal device releases) one or more of the first quality of service flow QoS flow, the first data radio bearer DRB, the first packet data convergence protocol PDCP entity, the first radio link control RLC entity, the first logical channel LCH, and the like that correspond to the first service data.

Optionally, the acknowledgment information of the first service data may further indicate whether the access network device (or the second access network device) is capable of completing transmission of the first service data.

Optionally, whether the access network device (or the second access network device) is capable of completing transmission of the first service data may include or be replaced with any one or more of the following: whether the access network device (or the second access network device) is capable of completing transmission of the first service data based on the first progress information (or the information about the first data amount and/or the information about the first time) of the first service data, not to discard (or the terminal device does not discard) the first service data, or not to release (or the terminal device does not release) one or more of the first quality of service flow QoS flow, the first data radio bearer DRB, the first packet data convergence protocol PDCP entity, the first radio link control RLC entity, the first logical channel LCH, and the like that correspond to the first service data.

Optionally, when the access network device (or the second access network device) is incapable of completing transmission of the first service data, the acknowledgment information of the first service data may include the information indicating that the access network device (or the second access network device) is incapable of completing transmission of the first service data.

Optionally, when the access network device (or the second access network device) is capable of completing transmission of the first service data, the acknowledgment information of the first service data may include the information indicating that the access network device (or the second access network device) is capable of completing transmission of the first service data.

Optionally, when the access network device (or the second access network device) is incapable of completing transmission of the first service data based on the first progress information (or the information about the first data amount and/or the information about the first time) of the first service data, the acknowledgment information of the first service data may further include information about the third data amount and/or information about the third time. Alternatively, the acknowledgment information of the first service data may further include information about a data amount that can be completed by the access network device (or the second access network device) (for example, information about the third data amount), information about time that can be completed by the access network device (or the second access network device) (for example, information about the third time), or information indicating that the access network device (or the second access network device) is capable of completing the third data amount within the third time. For example, the third data amount may be a data amount that can be completed by the access network device (or the second access network device) within the third time.

For example, the information about the data amount that can be completed by the access network device (or the second access network device) may include/be replaced with: information about a data amount of first target data that can be transmitted by the access network device (or the second access network device), and information about a data amount of the first target data that can be transmitted by the access network device (or the second access network device) within the time of the first service data. For example, the information about the time that can be completed by the access network device (or the second access network device) may include/be replaced with information about time required by the access network device (or the second access network device) to complete transmission of the first target data, or information about time required by the access network device (or the second access network device) to complete transmission of data corresponding to the data amount of the first target data.

Optionally, Implementation A may be used when Implementation a in S303 is performed.

Implementation B: The acknowledgment information of the first service data may include information about the third data amount and/or information about the third time. Alternatively, the acknowledgment information of the first service data may include information about a data amount that can be completed by the access network device (or the second access network device) (for example, information about the third data amount), information about time that can be completed by the access network device (or the second access network device) (for example, information about the third time), or information indicating that the access network device (or the second access network device) is capable of completing the third data amount within the third time.

Optionally, the method in this application may further include: The access network device (or the second access network device) determines the information about the third data amount and/or the information about the third time.

Optionally, Implementation B may be used when Implementation b in S303 is performed.

Optionally, the access network device may be replaced with the first access network device or another access network device. This is not limited in this application.

In a possible implementation, the first acknowledgment information may further indicate whether the access network device (or the second access network device) is capable of completing transmission of the first service data before the deadline of the first service data. Optionally, the first acknowledgment information may include information indicating that the access network device (or the second access network device) is capable of completing transmission of the first service data before the deadline of the first service data, or information indicating that the access network device (or the second access network device) is incapable of completing transmission of the first service data before the deadline of the first service data.

In some embodiments of this application, if the terminal device does not receive the first acknowledgment information of the first service data from the first access network device, the terminal device may consider by default/consider that the access network device is capable of completing transmission of the first service data.

S305: The terminal device determines, based on the first acknowledgment information of the first service data, to send or not to send the first service data.

In some embodiments, the terminal device determines, based on the first acknowledgment information of the first service data, to discard or not to discard the first service data, or to release or not to release one or more of the first quality of service flow QoS flow, the first data radio bearer DRB, the first packet data convergence protocol PDCP entity, the first radio link control RLC entity, the first logical channel LCH, and the like that correspond to the first service data.

S305 is an optional step.

Optionally, in this embodiment of this application, determining to send or not to send the first service data may include/be replaced with any one or more of the following:
determining to discard or not to discard the first service data, or determining to release or not to release one or more of the first quality of service flow QoS flow, the first data radio bearer DRB, the first packet data convergence protocol PDCP entity, the first radio link control RLC entity, the first logical channel LCH, and the like that correspond to the first service data.

In conclusion, this application provides a data transmission method. The method includes: The first access network device sends the first progress information of the first service data of the terminal device to the second access network device, where the first progress information includes the information about the data amount of the first service data and/or the information about the time of the first service data; the first access network device then receives the acknowledgment information of the first service data from the second access network device, where the acknowledgment information indicates whether the second access network device is capable of completing transmission of the first service data; and the first access network device further sends the first acknowledgment information of the first service data to the terminal device, where the first acknowledgment information indicates whether the access network device is capable of completing transmission of the first service data. In a scenario in which the terminal device is handed over between access network devices, according to the method, the terminal device can learn in time whether the access network device is capable of completing transmission of the service data of the terminal device, and the terminal device can perform a next decision in time (for example, continue to select to send the service data to the access network device, or suspend/stop sending the service data (or return to local processing)). This helps save energy of the terminal device and improve user experience.

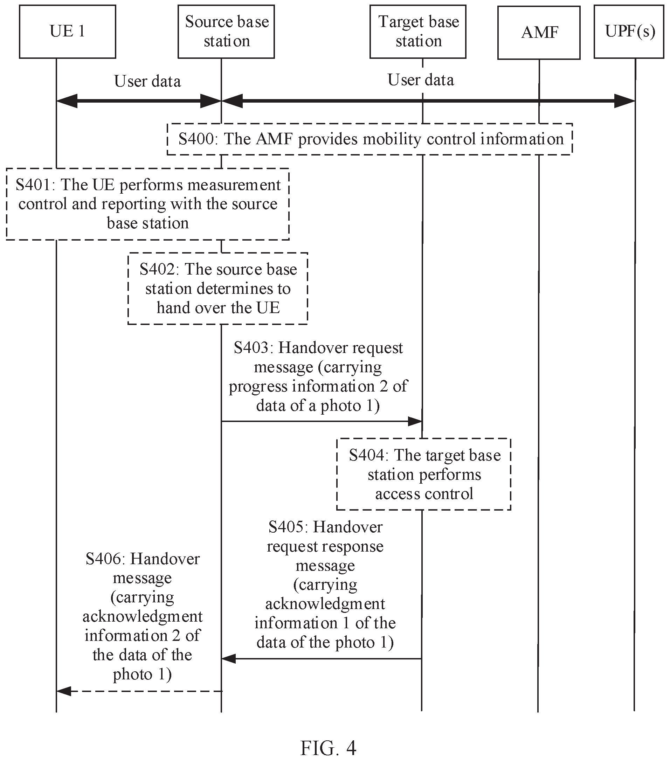

Based on the solution described in FIG. 3, the following further provides detailed descriptions by using specific implementations. As shown in FIG. 4, the method provided in this embodiment of this application is applied to an existing handover procedure, and may include the following steps.

S400: An AMF provides mobility control information.

S401: UE performs measurement control and reporting with a source base station.

For example, the UE receives a measurement configuration (including a measurement event and the like) from the source base station. The UE performs signal measurement on a current cell and a neighboring cell based on the measurement event, and then reports a measurement report to the source base station. When determining that signal quality of the neighboring cell of the UE is higher than signal quality of the current cell of the UE, the source base station determines to hand over the UE.

S402: The source base station determines to hand over the UE.

S400, S401, and S402 are optional steps.

S403: The source base station sends a handover request message to a target base station, where the handover request message carries progress information 2 of data of a photo 1.

For example, before the source base station (which may be equivalent to the first access network device) sends the handover request message to the target base station (which may be equivalent to the second access network device) (specific time is not limited), the UE interacts with the source base station, so that the UE obtains a data amount threshold and a delay threshold that are supported for transmission and that are from the source base station. The UE determines a format of the photo 1 based on the data amount threshold (which may be equivalent to the first data amount) and/or the delay threshold (which may be equivalent to the first time) of the source base station, and generates the data of the photo 1 (which may be equivalent to the first service data).

In a possible implementation, the UE may report, to the source base station at any time between S401 and S403, progress information 1 (which may be equivalent to the second progress information of the first service data) of transmission of the data of the photo 1.

The handover request message sent by the source base station to the target base station includes progress information 2 (which may be equivalent to the first progress information of the first service data) of the data of the photo 1. The progress information 2 of the data of the photo 1 may be progress information corresponding to a quality of service flow, a data radio bearer, photo data of a logical channel, or a media access control control element (per QoS flow/DRB/LCH per photo/MAC CE). The progress information 2 may include any one or more of the following items.
(1) Indication information 1: The indication information 1 indicates information about remaining time and/or a remaining data amount corresponding to the data of the photo 1.
   In an optional manner, the indication information 1 includes information about the remaining time and/or information about the remaining data amount that correspond/corresponds to the data of the photo 1
(2) Indication information 2: The indication information 2 indicates whether the data of the photo 1 has been generated.

In an optional manner, the indication information 2 includes information indicating that the data of the photo 1 has been generated or information indicating that the data of the photo 1 has not been generated.

If the data of the photo 1 has not been generated, the indication information 2 may indicate time at which the data of the photo 1 is expected to be generated, or the indication information 2 includes the time at which the data of the photo 1 is expected to be generated.

If the source base station cannot determine the progress information 2, the source base station may obtain information in the progress information 2 from the UE. If the UE has previously reported a data amount of the entire photo 1, the source base station may perform calculation.

S404: The target base station performs access control.

S404 is an optional step.

S405: The target base station sends a handover request response message to the source base station, where the handover request response message carries acknowledgment information 1 of the data of the photo 1.

The acknowledgment information 1 of the data of the photo 1 (which may be equivalent to the acknowledgment information of the first service data) may be acknowledgment information corresponding to a quality of service flow, a data radio bearer, or photo data of a logical channel, or a media access control control element (per QoS flow/DRB/LCH per photo/MAC CE). The acknowledgment information 1 may include any one or more of the following items.
(1) Indication information 3: The indication information 3 indicates that the target base station is capable of completing the remaining time and the remaining data amount corresponding to the data of the photo 1, or indicates that the target base station is incapable of completing the remaining time and the remaining data amount corresponding to the data of the photo 1.
   In an optional manner, the indication information 3 includes: The target base station is capable of completing the remaining time and the remaining data amount corresponding to the data of the photo 1, or the target base station is incapable of completing the remaining time and the remaining data amount corresponding to the data of the photo 1.
(2) Indication information 4: The indication information 4 indicates information about a data amount and time that can be promised by the target base station for the data of the photo 1.

If the data of the photo 1 has not been generated, the indication information 4 indicates information about a data amount and time that can be promised by the target base station.

In an optional manner, the indication information 4 includes the information about the data amount and the time that can be promised by the target base station.

S406: The source base station sends a handover message to the UE, where the handover message carries acknowledgment information 2 of the data of the photo 1.

S406 is an optional step.

The acknowledgment information 2 of the data of the photo 1 (which may be equivalent to the first acknowledgment information of the first service data) may be acknowledgment information corresponding to a quality of service flow, a data radio bearer, or photo data of a logical channel, or a media access control control element (per QoS flow/DRB/LCH per photo/MAC CE). For content included in the acknowledgment information 2, refer to the content in the acknowledgment information 1. Details are not described herein again.

Subsequently, the UE performs a handover procedure, to be handed over from a source cell to a target cell. For details, refer to the existing handover procedure. Details are not described herein again.

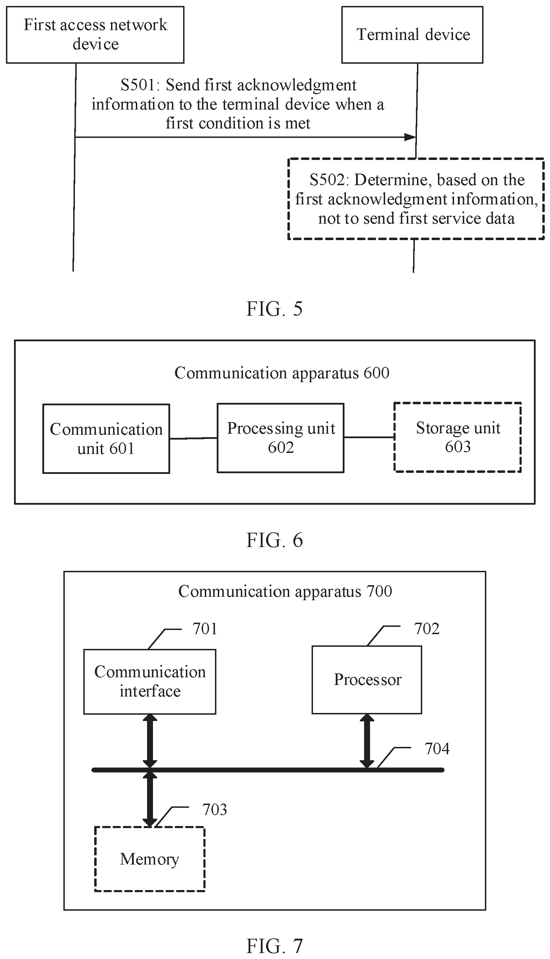

An embodiment of this application further provides another data transmission method. The method is applicable to but not limited to the communication system shown in FIG. 1. The solution is described by using an example in which the method is performed by a first access network device and a terminal device. The method may be performed by the first access network device and the terminal device, or may be performed by components (modules, chips, and the like) corresponding to the first access network device and the terminal device, or may be performed by apparatuses that are correspondingly used in cooperation with the first access network device and the terminal device. Specific forms and quantities corresponding to the first access network device and the terminal device are not limited in embodiments of this application. In addition, during actual application, the first access network device and the terminal device may be correspondingly replaced with other devices. This is not limited in this application. As shown in FIG. 5, a specific procedure of the method is as follows.

S501: The first access network device sends first acknowledgment information of first service data to the terminal device when a first condition is met.

For example, in a CU-DU split architecture, the first access network device in S501 may be/include/be replaced with a DU or a first DU. For example, the first DU sends the first acknowledgment information of the first service data to the terminal device.

Optionally, in the CU-DU split architecture, this embodiment of this application may further include: A first CU sends the first acknowledgment information of the first service data to the first DU.

For example, the first condition may include but is not limited to: The first access network device sends (or has sent) a handover request message; or the first access network device receives (or has received) a handover request acknowledge message.

For example, that the first access network device sends (or has sent) the handover request message may include/be replaced with: The first access network device sends (or has sent) the handover request message to a second access network device.

For example, that the first access network device receives (or has received) the handover request acknowledge message may include/be replaced with: The first access network device receives (or has received) the handover request acknowledge message from the second access network device.

In this embodiment of this application, for example, the first access network device is a source access network device (for example, a source base station) of the terminal device. For example, the second access network device is a target access network device (for example, a target base station) of the terminal device. For example, in a mobile handover scenario, the terminal device may be handed over from the first access network device to the second access network device, or handed over from a source cell served by the first access network device to a target cell served by the second access network device.

Optionally, the first acknowledgment information includes any one or more of the following: information indicating that the access network device is incapable of completing transmission of the first service data, information indicating that the terminal device does (or the terminal device is enabled to) not transmit the first service data, information indicating that the terminal device discards (or the terminal device is enabled to discard) the first service data, or information indicating that the terminal device releases (or the terminal device is enabled to release) one or more of a first quality of service flow QoS flow, a first data radio bearer DRB, a first packet data convergence protocol PDCP entity, a first radio link control RLC entity, a first logical channel LCH, and the like that correspond to the first service data.

Optionally, that the access network device is incapable of completing transmission of the first service data may include or be replaced with: The access network device is incapable of completing transmission of the first service data based on information about a first data amount and/or information about first time.

For example, the information about the first data amount and/or the information about the first time may include/be understood as information about a data amount (for example, the information about the first data amount) that is promised by the access network device (or the first access network device) and/or information about time (for example, the information about the first time) that is promised by the access network device (or the first access network device). For example, "promised" may include/be replaced with "previously promised."

For example, "not transmitting" may include/be replaced with "no longer transmitting" or "stopping transmitting."

Optionally, the first acknowledgment information may indicate any one or more of the following:
(1) the access network device is incapable of completing transmission of the first service data;
(2) the terminal device does (or the terminal device is enabled to) not transmit the first service data;
(3) the terminal device discards (or the terminal device is enabled to discard) the first service data; and
(4) the terminal device releases (or the terminal device is enabled to release) one or more of a first quality of service flow QoS flow, a first data radio bearer DRB, a first packet data convergence protocol PDCP entity, a first radio link control RLC entity, a first logical channel LCH, and the like that correspond to the first service data.

For example, in this embodiment of this application, the access network device may be the first access network device or the target access network device of the terminal device.

For example, the first service data may be determined or generated by the terminal device based on the information about the first data amount and/or the information about the first time that are/is from the first access network device. For example, the first data amount may be an amount of data that can be transmitted by the first access network device within the first time.

For example, the first service data may be associated with one or more of the first quality of service flow QoS flow, the first data radio bearer DRB, the first packet data convergence protocol PDCP entity, the first radio link control RLC entity, the first logical channel LCH, and the like. In addition, a specific form of the first service data may be photo (picture) data, video data, text data, or a signal. This is not limited in this application.

For example, as shown in FIG. 2A, each layer in the access stratum AS may carry service data. The SDAP layer (or entity) may carry the service data by using at least one QoS flow, the PDCP layer (entity) may carry the service data by using at least one DRB, and the PHY layer may carry the service data by using at least one LCH. Therefore, the first service data of the terminal device in this application may be carried in one or more of the first QoS flow, the first DRB, the first PDCP layer (or entity), the first RLC layer (or entity), and the first LCH.

S502: The terminal device determines, based on the first acknowledgment information, not to send the first service data.

In some embodiments, the terminal device determines, based on the first acknowledgment information, to discard the first service data, or to release one or more of the first quality of service flow QoS flow, the first data radio bearer DRB, the first packet data convergence protocol PDCP entity, the first radio link control RLC entity, the first logical channel LCH, and the like that correspond to the first service data.

S502 is an optional step.

Optionally, determining not to send the first service data may include/be replaced with any one or more of the following: determining to discard the first service data, or determining to release one or more of the first quality of service flow QoS flow, the first data radio bearer DRB, the first packet data convergence protocol PDCP entity, the first radio link control RLC entity, the first logical channel LCH, and the like that correspond to the first service data.

In conclusion, this application provides a data transmission method. The method includes: The first access network device sends the first acknowledgment information to the terminal device when the first condition is met, where the first acknowledgment information includes that the access network device is incapable of completing transmission of first service data. The first condition includes: The first access network device sends the handover request message; or the first access network device receives the handover request acknowledgment message. Therefore, it can be learned that when determining that the handover has occurred/is to occur, the first access network device notifies the terminal device in time that the access network device is incapable of completing transmission of the first service data, and the terminal device can perform a next decision in time (for example, continue to select to send the service data to the access network device, or suspend/stop sending the service data (or return to local processing)). This helps save energy of the terminal device and improve user experience.

It should be understood that, the conventional technology may change with evolution of the technical solutions, and the technical solutions provided in this application are not limited to the provided conventional technology.

It should be noted that different embodiments of this application or some steps (for example, any one or more steps) in different embodiments may be combined with each other to form a new embodiment. In addition, any one or more steps in different embodiments may include an optional step in an embodiment, or may include a mandatory step in an embodiment, or may include an optional step and a mandatory step in an embodiment. This is not limited in this application.

It should be noted that, unless otherwise specified or there is a logic conflict, terms and/or descriptions in different embodiments are consistent and may be mutually referenced.

It should be noted that a sequence of the steps in embodiments of this application is not limited in this application.

It should be noted that a determining sequence of different conditions in embodiments of this application is not limited in this application.

It should be noted that "after" and "when" in this application do not strictly limit a time point.

It should be noted that nouns, terms, and the like in this application are merely examples, and other names may be used. This is not limited in this application.

In the foregoing embodiments provided in this application, the methods provided in embodiments of this application are separately described from a perspective of interaction between devices. To implement functions in the methods provided in embodiments of this application, the first access network device, the second access network device, or the terminal device may include a hardware structure and/or a software module, and implements the functions in a form of the hardware structure, the software module, or a combination of the hardware structure and the software module. Whether a function in the functions is performed by using the hardware structure, the software module, or the combination of the hardware structure and the software module depends on particular applications and design constraints of the technical solutions.

In embodiments of this application, module division is an example, and is merely logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 6, an embodiment of this application further provides a communication apparatus 600, configured to implement functions of the first access network device, the second access network device, or the terminal device in the foregoing method. For example, the communication apparatus 600 may be a software module or a chip system. In this embodiment of this application, the chip system may include a chip, or may include a chip and another discrete component. The communication apparatus 600 may include a communication unit 601 and a processing unit 602.

In this embodiment of this application, the communication unit 601 may also be referred to as a transceiver unit, and may include a sending unit and/or a receiving unit, respectively configured to perform the sending and receiving steps of the first access network device, the second access network device, or the terminal device in the foregoing method embodiments. The processing unit 602 may be configured to read instructions and/or data in a storage module, to enable the communication apparatus 600 to implement the foregoing method embodiments.

Optionally, the communication apparatus 600 may further include a storage unit 603. The storage unit 603 is equivalent to a storage module, and may be configured to store instructions and/or data.

The following describes in detail a communication apparatus provided in embodiments of this application with reference to FIG. 6 and FIG. 7. It should be understood that descriptions of the apparatus embodiments correspond to the descriptions of the method embodiments. Therefore, for content that is not described in detail, refer to the foregoing method embodiments in FIG. 3 to FIG. 5. For brevity, details are not described herein again.

The communication unit 601 may also be referred to as a transceiver, a transceiver device, a transceiver apparatus, or the like. The processing unit may also be referred to as a processor, a processing board, a processing module, a processing apparatus, or the like. Optionally, a component configured to implement a receiving function in the communication unit 601 may be considered as a receiving unit, and a component configured to implement a sending function in the communication unit 601 may be considered as a sending unit. In other words, the communication unit 601 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmitter circuit, or the like.

When the communication apparatus 600 performs the procedure performed by the first access network device in FIG. 3 in the foregoing embodiments, both the communication unit 601 and the processing unit 602 in the communication apparatus 600 are located in the first access network device; or the communication unit 601 is located in a DU of the first access network device, and the processing unit 602 is located in a CU of the first access network device. Alternatively, in an O-RAN architecture, the communication unit 601 is located in an O-DU and/or an O-RU of the first access network device, and the processing unit 602 is located in an O-CU and/or an O-DU of the first access network device.

The communication unit 601 is configured to send first progress information of first service data of a terminal device to a second access network device, where the first progress information includes information about a data amount of the first service data and/or information about time of the first service data. The communication unit 601 is further configured to: receive acknowledgment information of the first service data from the second access network device, where the acknowledgment information indicates whether the second access network device is capable of completing transmission of the first service data; and send first acknowledgment information of the first service data to the terminal device, where the first acknowledgment information indicates whether an access network device is capable of completing transmission of the first service data. The processing unit 602 may be configured to read and execute stored instructions, data, and/or the like.

When the communication apparatus 600 performs the procedure performed by the second access network device in FIG. 3 in the foregoing embodiments, both the communication unit 601 and the processing unit 602 in the communication apparatus 600 are located in the second access network device; or the communication unit 601 is located in a DU of the second access network device, and the processing unit 602 is located in a CU of the second access network device. Alternatively, in an O-RAN architecture, the communication unit 601 is located in an O-DU and/or an O-RU of the second access network device, and the processing unit 602 is located in an O-CU and/or an O-DU of the second access network device.

The communication unit 601 is configured to receive first progress information of first service data of a terminal device from a first access network device, where the first progress information includes information about a data amount of the first service data and/or information about time of the first service data. The communication unit 601 is further configured to send acknowledgment information of the first service data to the first access network device, where the acknowledgment information indicates whether the second access network device is capable of completing transmission of the first service data. The processing unit 602 may be configured to read and execute stored instructions, data, and/or the like.

When the communication apparatus 600 performs the procedure performed by the terminal device in FIG. 3 in the foregoing embodiments, the communication unit 601 is configured to send second progress information of first service data, where the second progress information includes information about a remaining data amount of the first service data and/or information about remaining time of the first service data. The communication unit 601 is further configured to receive first acknowledgment information of the first service data from a first access network device, where the first acknowledgment information indicates whether an access network device is capable of completing transmission of the first service data. When the first acknowledgment information indicates that the access network device is incapable of completing transmission of the first service data, the first acknowledgment information includes information about a third data amount and/or information about third time, and the third data amount is a data amount that can be completed by the second access network device within the third time. The processing unit 602 may be configured to read and execute stored instructions, data, and/or the like.

When the communication apparatus 600 performs the procedure performed by the first access network device in FIG. 5 in the foregoing embodiments, both the communication unit 601 and the processing unit 602 in the communication apparatus 600 are located in the first access network device; or the communication unit 601 is located in a DU of the first access network device, and the processing unit 602 is located in a CU of the first access network device. Alternatively, in an O-RAN architecture, the communication unit 601 is located in an O-DU and/or an O-RU of the first access network device, and the processing unit 602 is located in an O-CU and/or an O-DU of the first access network device.

The communication unit 601 is configured to send first acknowledgment information to a terminal device when a first condition is met, where the first acknowledgment information includes information indicating that an access network device is incapable of completing transmission of first service data, and the first condition includes: A handover request message is sent, or a handover request acknowledgment message is received. The processing unit 602 may be configured to read and execute stored instructions, data, and/or the like.

When the communication apparatus 600 performs the procedure performed by the terminal device in FIG. 5 in the foregoing embodiments, the communication unit 601 is configured to receive first acknowledgment information from a first access network device, where the first acknowledgment information includes information indicating that the access network device is incapable of completing transmission of first service data. The processing unit 602 is configured to determine, based on the first acknowledgment information, not to send the first service data.

The foregoing is merely an example. The processing unit 602 and the communication unit 601 may further perform other functions. For more detailed descriptions, refer to the related descriptions in the method embodiments shown in FIG. 3 to FIG. 5. Details are not described herein.

FIG. 7 shows a communication apparatus 700 according to an embodiment of this application. The communication apparatus shown in FIG. 7 may be an implementation of a hardware circuit of the communication apparatus shown in FIG. 6. The communication apparatus 700 may be applied to the flowcharts shown above, and perform a function of the first access network device, the second access network device, or the terminal device in the foregoing method embodiments. For ease of description, FIG. 7 shows only main components of the communication apparatus.

As shown in FIG. 7, the communication apparatus 700 includes a communication interface 701 and a processor 702. The communication interface 701 and the processor 702 are coupled to each other. It may be understood that the communication interface 701 may be a transceiver or an input/output interface, or may be an interface circuit like a transceiver circuit. Optionally, the communication apparatus 700 may further include a memory 703, configured to store instructions executed by the processor 702, or input data required for the processor 702 to run instructions, or data generated by the processor 702 running instructions.

When the communication apparatus 700 is configured to implement the methods shown in FIG. 3 to FIG. 5, the communication interface 701 is configured to implement a function of the communication unit 601, and the processor 702 is configured to implement a function of the processing unit 602.

In this embodiment of this application, a specific connection medium between the communication interface 701, the processor 702, and the memory 703 is not limited. In this embodiment of this application, the memory 703, the processor 702, and the communication interface 701 are connected through a communication bus 704 in FIG. 7, and the communication bus 704 is represented by a bold line in FIG. 7. A connection manner between other components is schematically described, and is not limited thereto. The communication bus 704 may be classified into an address bus, a data bus, a control bus, and the like. For ease of representation, only one bold line is used for representation in FIG. 7, but this does not mean that there is only one bus or only one type of bus.

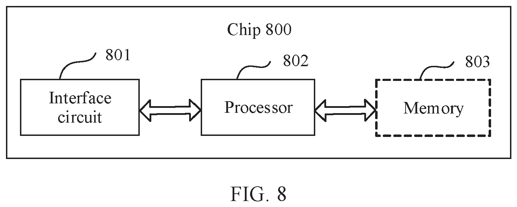

When the communication apparatus is a chip, FIG. 8 is a diagram of a simplified apparatus structure of the chip. A chip 800 includes an interface circuit 801 and one or more processors 802. Optionally, the chip 800 may further include a bus. Details are as follows.

The processor 802 may be an integrated circuit chip and has a signal processing capability. In an implementation process, steps in the foregoing data transmission method can be implemented by using a hardware integrated logic circuit in the processor 802, or by using instructions in a form of software. The processor 802 may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods and steps that are disclosed in embodiments of this application. The general-purpose processor may be a microprocessor, or the processor may be any conventional processor or the like.

The interface circuit 801 may be configured to send or receive data, instructions, or information. The processor 802 may process the data, the instructions, or other information received through the interface circuit 801, and send processed information through the interface circuit 801.

Optionally, the chip further includes a memory 803. The memory 803 may include a read-only memory and a random access memory, and provide operation instructions and data for the processor. A part of the memory 803 may further include a non-volatile random access memory (non-volatile random access memory, NVRAM).

Optionally, the memory stores an executable software module or a data structure, and the processor may perform a corresponding operation by invoking operation instructions (the operation instructions may be stored in an operating system) stored in the memory.

Optionally, the chip may be used in the first access network device, the second access network device, or the terminal device in embodiments of this application. Optionally, the interface circuit 801 may be configured to output an execution result of the processor 802. For the data transmission method provided in one or more embodiments of this application, refer to the foregoing embodiments. Details are not described herein again.

It should be noted that a function corresponding to each of the interface circuit 801 and the processor 802 may be implemented through a hardware design, or a software design, or a combination of software and hardware. This is not limited herein.

An embodiment of this application further provides a computer-readable storage medium. The computer-readable storage medium stores computer instructions used to implement the method performed by the first access network device, the second access network device, or the terminal device in the foregoing method embodiments.

For example, when the computer program is executed by a computer, the computer is enabled to implement the method performed by the first access network device, the second access network device, or the terminal device in the method embodiments.

An embodiment of this application further provides a computer program product including instructions. When the instructions are executed by a computer, the computer is enabled to implement the method performed by the first access network device, the second access network device, or the terminal device in the method embodiments.

An embodiment of this application further provides a chip including a processor, configured to invoke a computer program or computer instructions stored in a memory, so that the processor performs the data transmission method in the embodiments shown in FIG. 3 to FIG. 5.

In a possible implementation, an input of the chip corresponds to the receiving operation in the embodiments shown in FIG. 3 to FIG. 5, and an output of the chip corresponds to the sending operation in the embodiments shown in FIG. 3 to FIG. 5.

Optionally, the processor is coupled to the memory through an interface.

Optionally, the chip further includes the memory, and the memory stores the computer program or the computer instructions.

The processor mentioned above at any location may be a general central processing unit, a microprocessor, an application-specific integrated circuit (application-specific integrated circuit, ASIC), or one or more integrated circuits configured to control program execution of the data transmission method in embodiments shown in FIG. 3 to FIG. 5. The memory mentioned above at any location may be a read-only memory (read-only memory, ROM), another type of static storage device that can store static information and instructions, a random access memory (random access memory, RAM), or the like.

It should be noted that for ease and brevity of description, for explanations and beneficial effect of related content of any one of the communication apparatuses provided above, refer to the corresponding data transmission method embodiments provided above. Details are not described herein again.

In this application, a hardware layer, an operating system layer running above the hardware layer, and an application layer running above the operating system layer may be further included between communication apparatuses. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant communication software.

Division into the modules in embodiments of this application is an example, is merely division into logical functions, and may be another division during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

Based on descriptions of the foregoing implementations, a person skilled in the art may clearly understand that embodiments of this application may be implemented by hardware, firmware or a combination thereof. When software is used for implementation, the foregoing functions may be stored in a computer-readable medium or transmitted as one or more instructions or code on the computer-readable medium. The computer-readable medium includes a computer storage medium and a communication medium, and the communication medium includes any medium that enables a computer program to be transmitted from one place to another. The storage medium may be any available medium accessible to a computer. Examples of the computer-readable medium may include but are not limited to: a RAM, a ROM, an electrically erasable programmable read-only memory (electrically erasable programmable read-only memory, EEPROM), a compact disc read-only memory (compact disc read-Only memory, CD-ROM) or another optical disc storage, a disk storage medium or another disk storage device, or any other medium that can be used to carry or store expected program code in a form of an instruction or a data structure and can be accessed by a computer. In addition, any connection may be appropriately defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as the infrared, the radio, and the microwave are included in a definition of a medium to which the coaxial cable, the optical fiber and optical cable, the twisted pair, the DSL, or the wireless technologies such as the infrared, the radio, and the microwave belong. For example, a disk (disk) and a disc (disc) used in embodiments of this application include a compact disc (compact disc, CD), a laser disc, an optical disc, a digital versatile disc (digital video disc, DVD), a floppy disk, and a Blu-ray disc. The disk usually copies data through a magnetic means, and the disc copies data optically through a laser means. The foregoing combination should also be included in the protection scope of the computer-readable medium.

In conclusion, the foregoing descriptions are merely embodiments of this application and are not intended to limit the protection scope of this application. Any modification, equivalent replacement, or improvement made according to the disclosure of this application shall fall within the protection scope of this application.

## Claims

1. A data transmission method, wherein the method is applied to a first access network device, and comprises:
sending first progress information of first service data of a terminal device to a second access network device, wherein the first progress information comprises information about a data amount of the first service data and/or information about time of the first service data;
receiving acknowledgment information of the first service data from the second access network device, wherein the acknowledgment information indicates whether the second access network device is capable of completing transmission of the first service data; and
sending first acknowledgment information of the first service data to the terminal device, wherein the first acknowledgment information indicates whether an access network device is capable of completing transmission of the first service data.

2. The method according to claim 1, wherein the first access network device is a source access network device of the terminal device, and the second access network device is a target access network device of the terminal device.

3. The method according to claim 1, wherein the information about the data amount of the first service data comprises information about a remaining data amount of the first service data, and the remaining data amount is obtained based on a first data amount and a second data amount;
the information about the time of the first service data comprises information about remaining time of the first service data, and the remaining time is obtained based on first time and second time; and
the first data amount is a total data amount of the first service data that the first access network device is capable of completing within the first time, and the second data amount is a data amount of the first service data that the terminal device has transmitted within the second time.

4. The method according to any one of claims 1 to 3, wherein the acknowledgment information of the first service data comprises:
information indicating that the second access network device is capable of completing transmission of the first service data based on the first progress information; or
information indicating that the second access network device is incapable of completing transmission of the first service data based on the first progress information.

5. The method according to any one of claims 1 to 4, wherein the first progress information further comprises:
generation information of the first service data, wherein the generation information of the first service data indicates whether the terminal device has generated the first service data.

6. The method according to claim 4 or 5, wherein when the second access network device is incapable of completing transmission of the first service data,
the acknowledgment information of the first service data further comprises information about a third data amount and/or information about third time, wherein
the information about the third data amount is a data amount that the second access network device is capable of completing within the third time.

7. The method according to any one of claims 1 to 6, wherein the first acknowledgment information comprises the following:
information indicating that the access network device is capable of completing transmission of the first service data; or
information indicating that the access network device is incapable of completing transmission of the first service data.

8. The method according to claim 7, wherein when the first acknowledgment information comprises the information indicating that the access network device is incapable of completing transmission of the first service data, the first acknowledgment information further comprises:
the information about the third data amount, and/or
the information about the third time.

9. The method according to any one of claims 1 to 8, wherein the method further comprises:
receiving second progress information of the first service data from the terminal device, wherein the second progress information comprises the information about the remaining data amount of the first service data and/or the information about the remaining time of the first service data.

10. The method according to claim 9, wherein the second progress information further comprises:
the generation information of the first service data, wherein the generation information indicates whether the terminal device has generated the first service data.

11. The method according to any one of claims 1 to 10, wherein
the first progress information of the first service data is carried in a handover request message;
the acknowledgment information of the first service data is carried in a handover request acknowledgment message; and
the first acknowledgment information of the first service data is carried in an RRC reconfiguration message, a media access control control element MAC CE, or downlink control information DCI.

12. A data transmission method, wherein the method is applied to a second access network device, and comprises:
receiving first progress information of first service data of a terminal device from a first access network device, wherein the first progress information comprises information about a data amount of the first service data and/or information about time of the first service data; and
sending acknowledgment information of the first service data to the first access network device, wherein the acknowledgment information indicates whether the second access network device is capable of completing transmission of the first service data.

13. The method according to claim 12, wherein
the information about the data amount of the first service data comprises information about a remaining data amount of the first service data, and the remaining data amount is obtained based on a first data amount and a second data amount;
the information about the time of the first service data comprises information about remaining time of the first service data, and the remaining time is obtained based on first time and second time; and
the first data amount is a total data amount of the first service data that the first access network device is capable of completing within the first time, and the second data amount is a data amount of the first service data that the first access network device has transmitted within the second time.

14. The method according to claim 12 or 13, wherein the method further comprises:
determining whether the first service data is capable of being completed based on the first progress information of the first service data.

15. The method according to claim 14, wherein when the first service data is capable of being completed based on the first progress information of the first service data, the acknowledgment information of the first service data comprises information indicating that the second access network device is capable of completing transmission of the first service data based on the first progress information of the first service data.

16. The method according to claim 14, wherein when transmission of the first service data is incapable of being completed based on the first progress information of the first service data, the acknowledgment information of the first service data comprises information indicating that the second access network device is incapable of completing transmission of the first service data based on the first progress information of the first service data.

17. The method according to any one of claims 12 to 15, wherein the first progress information further comprises:
generation information of the first service data, wherein the generation information indicates whether the terminal device has generated the first service data.

18. The method according to claim 16 or 17, wherein when the second access network device is incapable of completing transmission of the first service data, the method further comprises:
determining a third data amount and/or third time, wherein
the third data amount is a data amount that the second access network device is capable of completing within the third time.

19. The method according to claim 18, wherein the acknowledgment information of the first service data further comprises:
information about the third data amount, and/or information about the third time.

20. The method according to any one of claims 12 to 19, wherein the first service data is determined by the terminal device based on information about the first data amount and/or information about the first time that are/is from the first access network device.

21. A data transmission method, wherein the method is applied to a terminal device, and comprises:
sending second progress information of first service data, wherein the second progress information comprises information about a remaining data amount of the first service data and/or information about remaining time of the first service data; and
receiving first acknowledgment information of the first service data from a first access network device, wherein the first acknowledgment information indicates whether an access network device is capable of completing transmission of the first service data, wherein
when the first acknowledgment information indicates that the access network device is incapable of completing transmission of the first service data, the first acknowledgment information comprises information about a third data amount and/or information about third time, and the third data amount is a data amount that the second access network device is capable of completing within the third time.

22. The method according to claim 21, wherein
the remaining data amount is obtained based on a first data amount and a second data amount;
the remaining time is obtained based on first time and second time; and
the first data amount is a total data amount of the first service data that the first access network device is capable of completing within the first time, and the second data amount is a data amount of the first service data that the first access network device has transmitted within the second time.

23. The method according to claim 21 or 22, wherein the second progress information further comprises generation information of the first service data, and the generation information indicates whether the terminal device has generated the first service data.

24. The method according to any one of claims 21 to 23, wherein the first acknowledgment information comprises:
information indicating that the access network device is capable of completing transmission of the first service data; or
information indicating that the access network device is incapable of completing transmission of the first service data.

25. The method according to any one of claims 21 to 24, wherein the method further comprises:
receiving query information from the first access network device, wherein the query information is used to query the second progress information of the first service data.

26. The method according to any one of claims 21 to 25, wherein the first service data is determined by the terminal device based on information about the first data amount and/or information about the first time that are/is from the first access network device.

27. The method according to any one of claims 21 to 26, wherein
the second progress information of the first service data is carried in a handover request message;
acknowledgment information of the first service data is carried in a handover request acknowledgment message; and
the first acknowledgment information of the first service data is carried in an RRC reconfiguration message, a media access control control element MAC CE, or downlink control information DCI.

28. A communication apparatus, comprising a module configured to perform the method according to any one of claims 1 to 11, a module configured to perform the method according to any one of claims 12 to 20, or a module configured to perform the method according to any one of claims 21 to 27.

29. A communication apparatus, comprising a processor and a memory, wherein
the memory is configured to store one or more computer programs or instructions, and the processor is configured to execute the one or more computer programs or instructions stored in the memory, to enable the communication apparatus to perform the method according to any one of claims 1 to 11, the method according to any one of claims 12 to 20, or the method according to any one of claims 21 to 27.

30. A communication system, comprising a terminal device, a first access network device, and a second access network device, wherein the first access network device is configured to perform the method according to any one of claims 1 to 11, the second access network device is configured to perform the method according to any one of claims 12 to 20, and the terminal device is configured to perform the method according to any one of claims 21 to 27.

31. A computer-readable storage medium, storing a computer program or instructions, wherein the computer program or the instructions are used to implement the method according to any one of claims 1 to 27.

32. A computer program product, wherein the computer program product comprises a computer program, and when the computer program is run on a computer, the computer is enabled to perform the method according to any one of claims 1 to 27.
